# EUROPÄISCHE PATENTANMELDUNG

(11) **EP 2 395 034 A1**
(43) Veröffentlichungstag der Anmeldung: **14.12.2011**
(21) Anmeldenummer: 10165863.1
(22) Anmeldetag: 14.06.2010
(51) Int. Cl.: C08F 299/08, C08L 83/10, C08G 81/02

(54) **Blends aus teilhydriertem Nitrilkautschuk und Silikonkautschuk, darauf basierende vulkanisierbaren Mischungen und Vulkanisate**

(71) Anmelder: LANXESS Deutschland GmbH, 51369 Leverkusen (DE); Technische Universität München, 80333 München (DE)
(72) Erfinder: Obrecht, Werner, 47447 Moers (DE); Kulbaba, Kevin, 51375 Leverkusen (DE); Müller, Julia Maria, 50670 Köln (DE); Soddemann, Matthias, 6467 Schattdorf (CH); Nuyken, Oskar, 81927 München (DE); Gantner, Carola, 87700 Memmingen (DE)
(74) Vertreter: Wichmann, Birgid

(57) **Zusammenfassung**

Bereitgestellt werden neue Kautschukblends auf Basis von teilhydriertem Nitrilkautschuk und vinylgruppenhaltigem Silikonkautschuk, die durch eine Metathese-Reaktion in Gegenwart geeigneter Katalysatoren hergestellt werden, darauf basierende vulkanisierbaren Mischungen und Vulkanisate sowie die zugehörigen Herstellungsverfahren.

## Beschreibung

Die Erfindung betrifft Blends aus teilhydriertem Nitrilkautschuk und Silikonkautschuk, deren Herstellung, darauf basierende vulkanisierbare Mischungen und Vulkanisate sowie die zugehörigen Herstellungsverfahren.

Aus dem Stand der Technik sind prinzipiell Mischungen aus ganz oder teilweise hydriertem Nitrilkautschuk und Silikonkautschuk bekannt. Derartige Mischungen sind für die Herstellung von technischen Gummiartikeln von Interesse, die neben hinreichender Ölbeständigkeit insbesondere eine gute Kälte- und hohe Hitzebeständigkeit aufweisen. Verwendung finden derartige Mischungen zur Herstellung von Dichtungen aller Art wie O-Ringen oder Membrandichtungen, von Achsmanschetten, Schläuchen, Tankauskleidungen, Abdeckhauben für Zündkerzen oder zur Auskleidung von Heizbälgen. Bei ihrer Herstellung tritt jedoch das bei der Herstellung von Blends typische Problem der teilweise unzureichenden Kompatibilität der Polymere auf. Diese erschwert die Blend-Herstellung, hat häufig eine schlechte Phasenmorphologie zur Folge und kann entsprechend zur Beeinträchtigung von Eigenschaften daraus hergestellter Vulkanisate führen.

JP 2007/138020 A beschreibt die Herstellung thermoplastischer Elastomerer und darauf basierender Formartikel. Eingesetzt wird eine Thermoplastkomponente (b) mit einem Schmelzpunkt von mindestens 165°C sowie eine Kautschukkomponente (a) aus einem Silikonkautschuk (a1) und einem weiteren, davon verschiedenen Kautschuk (a2), beispielsweise einem optional hydrierten Nitrilkautschuk. Die beiden Kautschuke (a1) und (a2) werden in einem ersten Schritt zunächst unter Einsatz eines Hydrosilylierungs-Vemetzers in Gegenwart eines Hydrosilylierungs-Katalysators dynamisch vernetzt und im nächsten Schritt unter Verwendung herkömmlicher Peroxid-, Schwefel- oder Harzvemetzem auch mit dem Thermoplasten dynamisch vernetzt. Derartige Blends erfüllen jedoch nicht alle an sie gerichteten Ansprüche bezüglich der mechanischen Eigenschaften, insbesondere der Tief- und Hochtemperatureigenschaften.

JP 05271474 A beschreibt die Herstellung von vulkanisierbaren Mischungen auf der Basis von Silikonkautschuk, hydriertem Nitrilkautschuk, Zinkmethacrylat und Peroxiden. Die daraus hergestellten Vulkanisate weisen bei hoher Härte hohe Reißfestigkeiten, hohe Reißdehnungen und eine hohe Rückprallelastizität auf. Erwünscht sind jedoch Vulkanisate mit weiteren Verbesserungen bei der Kälte- und Hitzebeständigkeit.

EP-A-0 558 385 beschreibt die Herstellung von vulkanisierbaren Mischungen auf der Basis von Silikonkautschuk, hydriertem Nitrilkautschuk, mindestens einer Verbindung ausgewählt aus (i) einem mindestens zweifach ungesättigten Ester oder Polyester auf der Basis von (Meth)acrylsäure mit Polyolen, (ii) einem mindestens zweifach ungesättigten Amid oder Polyamid von (Meth)acrylsäure mit Polyaminen, (iii) einem C₁-C₈-Alkoxysilan, das eine -NH₂, -SH oder ungesättigte C=C Doppelbindung aufweist und (iv) Triallylisocyanurat, sowie einem peroxidischen Vernetzer und gegebenenfalls einem Füllstoff und weiteren Additiven. Die Vulkanisate weisen gute mechanische Eigenschaften, eine gute Ölbeständigkeit sowie eine gute Kälte- und Hitzebeständigkeit auf. Erwünscht sind jedoch Vulkanisate mit weiteren Verbesserungen der genannten Eigenschaften.

EP-A-0 559 515 beschreibt die Herstellung vulkanisierbarer Mischungen auf der Basis von (a) hydriertem Nitrilkautschuk ("HNBR"), der mindestens einen Typ funktioneller Gruppen in Form von Carboxyl-, Carboxylat-, Carbonsäureanhydrid- oder Epoxgruppen aufweist und (b) Silikonkautschuk, der mindestens einen Typ funktioneller Gruppen aufweist, die mit dem jeweiligen Typ der funktionellen Gruppe des hydrierten Nitrilkautschuks reagieren können, wie z.B. Amino-, Hydroxyl-, Carboxyl- oder Epoxygruppen. Erhalten werden vulkanisierbare Mischungen mit guter Verarbeitbarkeit auf der Walze. Die Vernetzung wird in geeigneten Misch- und Knetaggregaten durchgeführt und führt zu einer Erhöhung der Verträglichkeit des Silikonkautschuks mit dem hydrierten Nitrilkautschuk. Die hieraus hergestellten Vulkanisate besitzen eine verbesserte Reißfestigkeit, Hitze-, Kälte- und Ölbeständigkeit. Nachteil ist, dass derartige funktionalisierte HNBR- bzw. Silikonkautschuke nicht durchgängig kommerziell verfügbar sind und somit in einem separaten Verfahrensschritt hergestellt werden müssen.

DE-A-3812 354 beschreibt die Herstellung von Gummimischungen auf der Basis von Silikonkautschuk und hydriertem Nitrilkautschuk, wobei im 1. Schritt zwei separate Mischungen aus a) Silikonkautschuk und bevorzugt Peroxid sowie b) hydriertem Nitrilkautschuk sowie bevorzugt Füllstoff, Peroxid, Weichmacher und anderen Additiven hergestellt werden. Im 2. Schritt werden diese beiden Mischungen miteinander gemischt und anschließend vulkanisiert. In Abhängigkeit von den Anteilen der beiden Kautschuke gelingt es, das Quellverhalten der Vulkanisate in Ölen und die Weiterreißfestigkeit vor und nach Ölexposition gezielt einzustellen. DE-A-38 12 354 liefert jedoch keinen Anhaltspunkt, wie die Hitze- und Kältebeständigkeit derartiger Vulkanisate verbessert werden kann.

EP-A-0 435 554 beschreibt die Herstellung leitfähiger Kautschukmischungen aus zwei Mischungskomponenten (A) und (B), wobei (A) Synthesekautschuk, wie z.B. optional hydriertem Nitrilkautschuk, und bestimmte leitfähige Ruße enthält und (B) aus Silikonkautschuk und optional weiteren Komponenten besteht. Die Mischungskomponenten (A) und (B) werden im 1. Schritt separat hergestellt und in einem 2. Schritt miteinander gemischt. Die Vulkanisation der Mischungen erfolgt peroxidisch oder mit Schwefel. Die so hergestellten Vulkanisate zeichnen sich durch eine hohe Konstanz und Reproduzierbarkeit der Leitfähigkeit aus. In den Beispielen werden als Kautschukbestandteil von (A) EPDM, Butylkautschuk sowie ein polysiloxanmodifizierter Acrylatkautschuk eingesetzt, hydrierte Nitrilkautschuke dagegen nicht. EP-A-0 435 554 enthält keine Hinweise, wie Vulkanisate auf Basis von Blends aus teilhydriertem Nitrilkautschuk und Silikonkautschuk mit verbesserten mechanischen Eigenschaften und gutem Compression Set nach Lagerung bei tiefen und hohen Temperaturen hergestellt werden können.

JP 60141738 A beschreibt die Herstellung von Kautschukcompounds auf Basis von teilhydriertem Nitrilkautschuk und Fluorsilikonkautschuk, bevorzugt 3,3,3-Trifluoropropylmethylpolysiloxan, die mit anderen Mischungsbestandteilen vermischt und anschließend peroxidisch vulkanisiert werden. Bevorzugt enthält der Fluorsilikonkautschuk gewisse Mengen an Methylvinylsiloxan zur Verbesserung der Vernetzung. Die Vulkanisate weisen bei 70 h Lagerung in einem Toluol/Isooctan (6/4)-Gemisch einen niedrigen Volumenquellgrad sowie ein gutes Tieftemperaturverhalten (Gehmann-Test und Compression Set) auf. Bezüglich der Dispersion der beiden Phasen erfüllen derartige Compounds jedoch noch nicht alle Anforderungen.

JP 62212143 A beschreibt Verbund-Vulkanisate, die aus Schichten von Kautschukblends durch Covulkanisation bei höheren Temperaturen hergestellt werden. Als Kautschukblends werden (1) Mischungen aus hydriertem Nitrilkautschuk mit Propylen/Tetrafluoroethylen-Kautschuk, (2) Mischungen aus hydriertem Nitrilkautschuk mit halogenhaltigem Fluorkautschuk, (3) Mischungen aus Propylen/Tetrafluoroethylen-Kautschuk mit halogenhaltigem Fluorkautschuk oder (4) Mischungen aus Propylen/Tetrafluoroethylen-Kautschuk mit Fluorosilikonkautschuk beschrieben. Die Kautschukblends enthalten zusätzlich (bezogen auf 100 Gew.Teile Kautschuk) 0,1-15 Gew.-Teile organisches Peroxid und 1-2 Gew.-Teile multifunktioneller Monomere (vorzugsweise Triallylisocyanurat). Die Verbundvulkanisate werden zur Herstellung von Dichtungen eingesetzt.

JP 6016872 A beschreibt eine vulkanisierbare Kautschukmischung, die bezogen auf insgesamt 100 Gew.-Teile Kautschuk 98 - 2 Gew.-Teile hydrierten Nitrilkautschuk mit einer Mooney Viskosität < 70 ME und einer Jodzahl < 120 sowie 2 - 98 Gew.-Teile Silikonkautschuk enthält und daneben Füllstoff auf Basis Kieselsäure oder Ruß in Mengen von 200 Gew.-Teilen sowie 0,3-10 Gew.-Teile eines peroxidischen Vernetzers. Eine gute Verteilung des hydrierten Nitrilkautschuks und des Silikonkautschuks wird erreicht, indem zunächst separate Teilmischungen des hydrierten Nitrilkautschuks mit Füllstoff und Peroxid sowie des Silikonkautschuks mit Füllstoff und Peroxid hergestellt werden, die danach gemischt und vulkanisiert werden. Die erhaltenen Vulkanisate weisen verbesserte mechanische Eigenschaften, sowie Verbesserungen in der Kälte-, Hitze- und Ölbeständigkeit auf. Gewünscht sind jedoch weitere Verbesserungen der mechanischen Eigenschaften sowie der Hitze- und Kältebeständigkeit.

JP 6263923 A beschreibt eine Mischung aus zwingend drei Komponenten, (A) teilweise hydriertem Nitrilkautschuk, (B) Polyvinylchlorid und (C) Silikonkautschuk. Vulkanisate werden daraus durch Kneten der Komponenten (A) und (B) und nachträgliches Hinzufügen von (C) erhalten, wobei ein organisches Peroxid zur Vulkanisation zugesetzt wird. Die Vulkanisate besitzen eine gute Hitze-, Ozon- und Witterungsbeständigkeit sowie einen guten Abriebwiderstand und eine gute Ölbeständigkeit. JP 06263923 ist nicht zu entnehmen, wie der Druckverformungsrest bei hoher und tiefer Temperatur von Blends auf Basis von teilhydriertem Nitrilkautschuk und von Silikonkautschuk verbessert werden kann.

JP 10168232 A beschreibt Mischungen aus 100 Gew.-Teilen hydriertem Nitrilkautschuk, einem Vernetzer und 0,2 bis 2,0 Gew.-Teilen Silikonöl. Daraus nach peroxidischer Vulkanisation erhaltene Vulkanisate weisen eine geringe Klebrigkeit und eine hohe Kraftstoffbeständigkeit auf und werden zur Innenauskleidung kraftstoffbeständiger Lagerbehälter verwendet. Als Silikonöl wird ein Polymer mit niedriger Molmasse und kein hochmolekularer Silikonkautschuk verwendet. Das Silikonöl enthält keine Vinylgruppen und wird bei der Vulkanisation nicht chemisch fixiert. Hierdurch bleibt seine Wirkung als Formtrennmittel auch nach der Vulkanisation erhalten.

US 2002/053379 A1 beschreibt die Anbindung von Substanzen an Oberflächen, indem zunächst ein Katalysator auf eine Oberfläche aufgebracht wird und danach die anzubindende Substanz damit in Kontakt gebracht und durch eine Metathese-Reaktion an diese Oberfläche gebunden wird. Die bevorzugte Metathesereaktion ist dabei die ringöffnende Metathesepolymerisation (ROMP) von Monomeren wie Norbornen und Norbornenderivaten wie Ethylidennorbornen unter Verwendung bekannter Katalysatoren. Möglich ist aber auch die acyclische Dien Metathese (ADMET). Nach der Lehre von US 2002/053379 A1 wird das Verfahren entweder zur Beschichtung von Oberflächen oder zum Verkleben von zwei verschiedenen Oberflächen bzw. Substraten eingesetzt. Möglich ist z.B. die Herstellung von Gummi/Metallteilen, von Faser/Elastomer- bzw. von Cord/Elastomer-Verbunden sowie die Ausrüstung von Reifenkarkassen mit Laufflächenmischungen d.h. zur Runderneuerung von LKW-Reifen. Allgemein erwähnt wird die Anbindung von Elastomeren wie hydriertem Nitrilkautschuk oder Silikonkautschuk oder Mischungen daraus an Metalloberflächen. Ob und wie bei Blends aus teilhydriertem Nitrilkautschuk und Silikonkautschuk verbesserte Hoch- sowie Tieftemperatureigenschaften erreicht werden können, wird weder offenbart noch nahegelegt.

EP-A-1 505 114 beschreibt Kautschukmischungen auf der Basis von hydriertem Nitrilkautschuk, denen zwecks Erhöhung der Fließfähigkeit und somit verbesserter Verarbeitbarkeit Organopolysiloxane mit Kohlenwasserstoffresten mit weniger als 4 C-Atomen zugesetzt werden. Die Mischungen enthalten bevorzugt zusätzlich einen Vernetzer sowie optional weitere Additive. Die Mischungen werden für die Herstellung von Gummiteilen, die in der Automobil-, Öl- und Elektroindustrie Anwendung finden, eingesetzt. Es finden sich in EP-A-1 505 114 keinerlei Hinweise, wie für Vulkanisate auf Basis von teilhydriertem NBR und vinylgruppenhaltigem Silikonkautschuk eine Verbesserung des Modulniveaus und des Compression Set bei niedrigen und hohen Temperaturen erreicht werden kann.

WO-A-2008/044063 beschreibt eine formbare Elastomerzusammensetzung, die aus der Dispersion eines vernetzten organischen Polymers (z.B. EPDM oder HNBR) in unvernetztem Silikonkautschuk besteht. Die Herstellung dieser Elastomerzusammensetzung erfolgt in einer 1. Stufe durch Vernetzung von EPDM bzw. HNBR mittels eines Phenol/Formaldehyd-Harz Vernetzers in der Silikonkautschukmatrix. Die Vulkanisation der Silikonkautschukmatrix erfolgt anschließend in einer 2. Stufe peroxidisch oder durch platinkatalysierte Hydrosilylierung. Die Elastomerzusammensetzung wird für die Herstellung von Heizbälgen, Abdeckhauben für Zündkerzen sowie für keramifizierbare Beschichtungen von Kabeln und Leitungen von Sicherheitsbeleuchtungssystemen verwendet. In WO-A-2008/044063finden sich keine Hinweise, wie eine Erhöhung des Moduls und eine Verbesserung des Compression Sets von Vulkanisaten bei hohen und tiefen Temperaturen erreicht werden kann.

WO-A-2005/059008beschreibt die dynamische Vulkanisation einer Elastomermischung, wobei in Schritt (I) ein organischer Kautschuk (A), ein optionaler Verträglichkeitsvermittler (B), ein optionaler Katalysator (C), ein Organopolysiloxan (D), ein optionaler Vernetzer wie z.B. eine Organohydridoverbindung (E), ein Vulkanisationsmittel (F), das ein Pt-Katalysator sein kann, mischt und in einem zweiten Schritt das Organopolysiloxan dynamisch vernetzt. Es wird ausgeführt, dass als organischer Kautschuk (A) alle Kautschuke, die keine anorganischen Bestandteile wie Fluor oder Silizium enthalten, eingesetzt werden können. Nitrilkautschuke sowie hydrierte Nitrilkautschuke werden als mögliche organische Kautschuke erwähnt, teilhydrierte Nitrilkautschuke dagegen nicht. Beschrieben wird, dass die dynamische Vulkanisation sowohl radikalisch mit Peroxiden als auch durch Hydrosilylierung mit Pt-Katalysatoren oder durch Polykondensation mit Zinnkatalysatoren durchgeführt werden kann. Für die Durchführbarkeit der Hydrosilylierung und der Polykondensation ist die Anwesenheit bestimmter funktioneller Gruppen sowohl in organischen Kautschuk (A) als auch im Silikonkautschuk (D) notwendig. Die Beispiele von WO-A-2005/059008verwenden ausschließlich EPDM als organischen Kautschuk (A). Die Vulkanisate werden ausschließlich durch die mechanischen Eigenschaften bei Raumtemperatur charakterisiert, Angaben über die Hitze- und Kältebeständigkeit der Produkte finden sich nicht. Aus der WO-A-2005/059008können keine Schlüsse auf die Verbesserung der Eigenschaften von Vulkanisaten auf Basis von teilhydriertem Nitrilkautschuk und Silikonkautschuk gezogen werden.

WO-A-2008/027283beschreibt die Herstellung von Blockcopolymeren, indem zwei oder mehr chemisch unterschiedliche ethylenisch ungesättigte Polymere mit einem Metathesekatalysator behandelt werden. Nach den Beispielen der WO-A-2008/027283wird die Metathese ausschließlich in Gegenwart von Toluol oder Tetrachlorethan als Lösungsmittel eingesetzt. In der Beschreibung wird die Kreuz-Metathese von hydriertem Polybutadien und HNBR bzw. von einem ungesättigten Polycarbonat mit einem ungesättigten Polysiloxan beschrieben, eine Kreuzmetathese von teilhydriertem HNBR mit Vinylsilikonkautschuk und eine nachfolgende Vulkanisation wird jedoch nicht beschrieben oder nahegelegt. WO-A-2008/027283ist auf die Verwendung der Blockcopolymeren zur Herstellung von formbaren Harzen und Klebstoffen gerichtet und liefert keine Informationen, ob und wie die mechanischen Eigenschaften sowie der Compression Set bei tiefer und hoher Temperatur von Formteilen auf Basis von Vulkanisaten aus teilhydriertem Nitrilkautschuk und Silikonkautschuk verbessert werden können.

Dem vorgenannten Stand der Technik ist gemeinsam, dass aus ihm keine Anhaltspunkte zu entnehmen sind, wie eine Verbesserung der Eigenschaften von Vulkanisaten aus hydrierten Nitrilkautschuk und Silikonkautschuk erreicht werden kann, insbesondere ein verbessertes Modulniveau und verbesserte Eigenschaften bei hohen und niedrigen Temperaturen.

Die **Aufgabe** der vorliegenden Erfindung bestand somit in der Bereitstellung von Vulkanisaten auf der Basis von teilhydriertem Nitrilkautschuk und vinylgruppenhaltigem Silikonkautschuk, die über verbesserte mechanische Eigenschaften, insbesondere ein verbessertes Modulniveau und verbesserte Eigenschaften bei hohen und tiefen Temperaturen verfügen.

Die Aufgabe wurde überraschenderweise dadurch gelöst, dass man teilhydrierten Nitrilkautschuk und vinylgruppenhaltigen Silikonkautschuk unter Zusatz geeigneter Katalysatoren einer Metathese unterzieht, bevorzugt ohne Lösungsmittel. Durch Mischen des erhaltenen Blends mit weiteren Bestandteilen und nachfolgende Vulkanisation mit Peroxiden können Vulkanisate mit den gewünschten verbesserten Eigenschaften erhalten werden.

**Gegenstand der Erfindung** ist somit ein **Verfahren** zur **Herstellung eines Kautschukblends,** indem man mindestens einen teilhydrierten Nitrilkautschuk und mindestens einen vinylgruppenhaltigen Silikonkautschuk miteinander mischt, dadurch gekennzeichnet, dass das Mischen in Gegenwart eines Metathese-Katalysators erfolgt, bei dem es sich um einen Komplexkatalysator auf Basis eines Metalls der 6. oder 8. Nebengruppe des Periodensystems handelt, der mindestens einen carbenartig an das Metall gebundenen Liganden aufweist.

Bevorzugt wird das erfindungsgemäße Verfahren zur Herstellung eines Kautschukblends im Wesentlichen frei von organischen Lösungsmitteln durchgeführt.

Im Rahmen dieser Anmeldung ist unter der Angabe, dass das Verfahren im wesentlichen frei von organischen Lösungsmitteln durchgeführt wird, zu verstehen, dass bei der bevorzugten Herstellung des Kautschukblends durch Mischen mindestens eines teilhydrierten Nitrilkautschuks und mindestens einen vinylgruppenhaltigen Silikonkautschuk in Gegenwart des Metathese-Katalysators die Menge an organischem Lösungsmittel maximal 1200 ppm, bevorzugt maximal 500 ppm und insbesondere maximal 100 ppm beträgt. Unter organischen Lösungsmitteln sind dabei aliphatische, cycloaliphatische oder aromatische Kohlenwasserstoffe mit 1 bis 14, bevorzugt 1-12 Kohlenstoffatomen zu verstehen. Diese aliphatischen, cycloaliphatischen oder aromatischen C₁-C₁₄-Kohlenwasserstoffe können ein- oder mehrfach halogeniert sein und ein oder mehrere weitere funktionelle Gruppen, insbesondere Hydroxy, CN, Carboxyl, Carboxylat, oder auch ein oder mehrere Heteroatome, bevorzugt Sauerstoff oder Stickstoff, enthalten.

Von Bedeutung ist im erfindungsgemäßen Verfahren der Einsatz des Metathese-Komplexkatalysators auf Basis eines Metalls der 6. oder 8. Nebengruppe des Periodensystems, der mindestens einen carbenartig an das Metall gebundenen Liganden aufweist. Derartige Katalysatoren sind prinzipiell bekannt und werden bereits zum Molekulargewichtsabbau von Nitrilkautschuken durch Metathese eingesetzt. Der erfindungsgemäß einzusetzende Katalysator wird daher nachfolgend auch abgekürzt als "Metathese-Katalysator" bezeichnet.

Von Vorteil ist, dass die Herstellung von Vulkanisaten auf Basis der erfindungsgemäßen Blends unter Einsatz von Peroxiden erfolgt, die Anwesenheit anderer üblicher Vernetzersysteme in Form von Schwefel, Schwefel-freisetzender Systeme oder Phenol-Formaldehydharz-basierter Systeme wie sie im zuvor beschriebenen Stand der Technik teilweise eingesetzt werden, ist nicht erforderlich.

**Gegenstand der Erfindung** ist ferner der so erhältliche **Kautschukblend** auf Basis mindestens eines teilhydrierten Nitrilkautschuks und mindestens eines vinylgruppenhaltigen Silikonkautschuks.

Diese Kautschukblends unterscheiden sich von den bekannten Kautschukblends. Durch die Cross-Metathese kommt es zur kovalenten Anbindung des teilhydrierten Nitrilkautschuks an den Silikonkautschuk, es kann somit eine sehr gute Verteilung der beiden Kautschuke ineinander erreicht werden.

**Gegenstand der Erfindung** sind ferner **vulkanisierbare Mischungen** enthaltend den vorgenannten Kautschukblend sowie mindestens ein peroxidisches Vernetzungssystem. Sie können ferner ein oder mehrere zusätzliche Kautschukadditive enthalten.

**Gegenstand der Erfindung** ist weiterhin ein **Verfahren zur Herstellung von Vulkanisaten,** indem man die vorgenannten vulkanisierbaren Mischungen einer Vernetzungsreaktion unterzieht, sowie die dabei erhaltenen **Vulkanisate.**

Im Stand der Technik wurden bisher keine Vulkanisate beschrieben, die auf der Basis von Blends aus teilhydriertem Nitrilkautschuk und vinylgruppenhaltigem Silikonkautschuk hergestellt werden. Diese erfindungsgemäßen Vulkanisate zeichnen sich durch gleich gute oder verbesserte mechanische Eigenschaften, insbesondere ein erhöhtes und somit verbessertes Modulniveau und verbesserte Druckverformungsreste sowohl bei hohen als auch bei tiefen Temperaturen aus. Dies zeigt sich im Vergleich zu Vulkanisaten aus Blends von teilhydriertem Nitrilkautschuk und vinylgruppenhaltigem Silikonkautschuk, die nicht in Gegenwart eines Metathese-Katalysators hergestellt werden.

Im Rahmen dieser Anmeldung und Erfindung können alle zuvor genannten und im Folgenden genannten, allgemeinen oder in Vorzugsbereichen genannten Definitionen von Resten, Parametern oder Erläuterungen untereinander, also auch zwischen den jeweiligen Bereichen und Vorzugsbereichen in beliebiger Weise kombiniert werden.

Der im Rahmen dieser Anmeldung im Zusammenhang mit den verschiedenen Typen von Metathese-Katalysatoren oder Verbindungen der allgemeinen Formel (I), (Ia), (Ib) oder (Ic) verwendete Begriff "substituiert" bedeutet, dass ein Wasserstoff-Atom an einem angegebenen Rest oder Atom durch eine der jeweils angegebenen Gruppen ersetzt ist, mit der Maßgabe, dass die Wertigkeit des angegebenen Atoms nicht überschritten wird und die Substitution zu einer stabilen Verbindung führt.

### Teilhydrierter Nitrilkautschuk:

Zur Herstellung der erfindungsgemäßen Blends werden teilhydrierte Nitrilkautschuke eingesetzt. Diese enthalten Wiederholungseinheiten, die sich von mindestens einem konjugierten Dien und mindestens einem α,β-ungesättigten Nitril ableiten, wobei die C=C Doppelbindungen aus den einpolymerisierten Dien-Monomeren teilweise hydriert sind, bevorzugt zu mindestens 50% bis zu maximal 99 %, besonders bevorzugt zu 75 bis 98,5 %, ganz besonders bevorzugt zu 80 bis 98 % und insbesondere zu 85 bis 96%.

Zur Herstellung der erfindungsgemäßen Blends können ferner teilhydrierte Nitrilkautschuke eingesetzt werden, die Wiederholungseinheiten enthalten, die sich von mindestens einem konjugierten Dien, mindestens einem α,β-ungesättigten Nitril und einem oder mehreren weiteren copolymerisierbaren Termonomeren ableiten, wobei die C=C Doppelbindungen aus den einpolymerisierten Dien-Monomeren sowie den weiteren einpolymerisierten Termonomeren teilhydriert sind, bevorzugt zu mindestens 50% bis zu maximal 99 %, besonders bevorzugt 75 - 98,5 %, ganz besonders bevorzugt 80 - 98 % und insbesondere 85 - 96%.

Das **konjugierte Dien** kann von jeder Natur sein. Bevorzugt werden (C₄-C₆) konjugierte Diene eingesetzt. Besonders bevorzugt sind 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als **α,β-ungesättigtes Nitril** kann jedes bekannte α,β-ungesättigte Nitril eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Als weitere copolymerisierbare Termonomere können beispielsweise **aromatische Vinylmonomere,** bevorzugt Styrol, α-Methylstyrol und Vinylpyridin, **fluorhaltige Vinylmonomere,** bevorzugt Fluorethylvinylether, Fluorpropylvinylether, o-Fluormethylstyrol, Vinylpentafluorbenzoat, Difluoroethylen und Tetrafluoroethylen, oder auch **copolymerisierbare Antiageing Monomere,** bevorzugt N-(4-anilinophenyl) acrylamid, N-(4-anilinophenyl)methacrylamid, N-(4-anilinphenyl) cinnamide, N-(4-anilinophenyl) crotonamid, N-phenyl-4-(3-vinyl-benzyl oxy)anilin und N-phenyl-4-(4-vinylbenzyloxy) anilin eingesetzt werden sowie **nicht-konjugierte Diene,** wie 4-Cyanocyclohexen und 4-Vinylcyclohexen, oder auch **Alkine,** wie 1-oder 2-Butin.

Als weitere copolymerisierbare Termonomere können ein oder mehrere carboxygruppenhaltige, copolymerisierbare Termonomere eingesetzt werden, beispielsweise α,β-ungesättigte Monocarbonsäuren, deren Ester, α,β-ungesättigte Dicarbonsäuren, deren Mono- oder -Diester oder deren entsprechenden Anhydride oder Amide.

Als **α,β-ungesättigte Monocarbonsäuren** können bevorzugt Acrylsäure und Methacrylsäure eingesetzt werden. Einsetzbar sind auch **Ester der α,β-ungesättigten Monocarbonsäuren,** bevorzugt deren Alkylester, Alkoxyalkyl- oder Hydroxyalkylester.

Bevorzugt sind **C₁-C₁₈ Alkylester der α,β-ungesättigten Monocarbonsäuren,** besonders bevorzugt C₁-C₁₈ Alkylester der Acryl- und Methacrylsäure, insbesondere bevorzugt Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethyhexyl(meth)acrylat, Octyl(meth)acrylat, n-Dodecyl(meth)acrylat, 2-Propylheptylacrylat und Lauryl(meth)acrylat. Insbesondere wird n-Butylacrylat eingesetzt.

Bevorzugt sind auch **C₂-C₁₂-Alkoxyalkylester der α,β-ungesättigten Monocarbonsäuren,** besonders bevorzugt **C₂-C₁₂-** Alkoxyalkylester der Acrylsäure oder der Methacrylsäure, insbesondere Methoxymethyl(meth)acrylat, Methoxyethyl(meth)acrylat, Ethoxyethyl(meth)acrylat und Methoxyethyl(meth)acrylat. Insbesondere wird Methoxyethylacrylat eingesetzt.

Bevorzugt sind auch **C₁-C₁₂-Hydroxyalkylester der α,β-ungesättigten Monocarbonsäuren,** besonders bevorzugt C₁-C₁₂-Hydroxyalkylester der Acryl- oder Methacrylsäure, inbesondere 2-Hydroxyethyl(meth)acrylat, 3-Hydroxypropyl-(meth)acrylat und Hydroxy(butyl(meth)acrylat.

Als sonstige Ester der α,β-ungesättigten Monocarbonsäuren werden ferner beispielsweise Polyethylenglykol(meth)acrylat, Polypropylenglykol(meth)acrylat, Glycidyl(meth)acrylat, Epoxy(meth)acrylat, N-(2-Hydroxyethyl)acrylamide, N-(2-Hydroxymethyl)acrylamide und Urethan(meth)acrylat eingesetzt.

Einsetzbar sind auch Mischungen von Alkylestern, wie z.B. den vorgenannten, mit Alkoxyalkylestern, z.B. in Form der vorgenannten.

Einsetzbar sind auch **Cyanoalkylacrylate und Cyanoalkylmethacrylate,** in denen die Zahl der C-Atome in der Cyanoalkylgruppe 2-12 beträgt, vorzugsweise α-Cyanoethylacrylat, β-Cyanoethylacrylat und Cyanobutylmethacrylat.

Einsetzbar sind auch **Fluor-substituierte Benzylgruppenhaltige** Acrylate **oder Methacrylate,** vorzugsweise Fluorobenzylacrylat, und Fluorobenzylmethacrylat. Einsetzbar sind auch **Fluoroalkylgruppen haltige Acrylate und -Methacrylate,** vorzugsweise Trifluoroethylacrylat und Tetrafluoropropylmethacrylat. Einsetzbar sind auch **Aminogruppenhaltige α,β-ungesättigte Carbonsäureester** wie Dimethylaminomethylacrylat und Diethylaminoethylacrylat.

Als copolymerisierbare Monomere können ferner **α,β-ungesättigte Dicarbonsäuren,** bevorzugt Maleinsäure, Fumarsäure, Crotonsäure, Itaconsäure, Citraconsäure und Mesaconsäure, eingesetzt werden.

Eingesetzt werden können ferner **α,β-ungesättigte Dicarbonsäureanhydride,** bevorzugt Maleinsäureanhydrid, Itaconsäureanhydrid, Citraconsäureanhydrid und Mesaconsäureanhydrid.

Eingesetzt werden können ferner **Mono- oder Diester von α,β-ungesättigten Dicarbonsäuren.** Bei diesen α,β-ungesättigten Dicarbonsäuremono- oder diestern kann es sich z.B. um **Alkyl-,** bevorzugt C₁-C₁₀-Alkyl, insbesondere Ethyl-, n-Propyl-, iso-Propyl, n-Butyl-, tert.-Butyl, n-Pentyl- oder n-Hexyl-, **Alkoxyalkyl-,** bevorzugt C₂-C₁₂ Alkoxyalkyl-, besonders bevorzugt C₃-C₈-Alkoxyalkyl, **Hydroxyalkyl,** bevorzugt C₁-C₁₂ Hydroxyalkyl-, besonders bevorzugt C₂-C₈-Hydroxyalkyl, **Cycloalkyl-,** bevorzugt C₅-C₁₂-Cycloalkyl-, besonders bevorzugt C₆-C₁₂-Cycloalkyl, **Alkylcycloalkyl-,** bevorzugt C₆-C₁₂-Alkylcycloalkyl-, besonders bevorzugt C₇-C₁₀-Alkylcycloalkyl, oder **Aryl-,** bevorzugt C₆-C₁₄-Aryl-Mono- oder -Diester handeln, wobei es sich im Fall der Diester jeweils auch um gleiche oder gemischte Ester handeln kann.

### Beispiele von α,β-ungesättigten Dicarbonsäuremonoestern umfassen

- Maleinsäuremonoalkylester, bevorzugt Monomethylmaleat, Monoethylmaleat, Monopropyl maleat und Mono-n-butylmaleat;
- Maleinsäuremonocycloalkylester, bevorzugt Monocyclopentylmaleat, Monocyclohexyl maleat und Monocycloheptylmaleat;
- Maleinsäuremonoalkylcycloalkylester, bevorzugt Monomethylcyclopentylmaleat und Monoethylcyclohexylmaleat;
- Maleinsäuremonoarylester, bevorzugt Monophenylmaleat;
- Maleinsäuremonobenzylester, bevorzugt Monobenzylmaleat;
- Fumarsäuremonoalkylester, bevorzugt Monomethylfumarat, Monoethylfumarat, Monopropyl fumarat und Mono-n-butyl fumarat;
- Fumarsäuremonocycloalkylester, bevorzugt Monocyclopentylfumarat, Monocyclohexyl fumarat und Monocycloheptylfumarat;
- Fumarsäuremonoalkylcycloalkylester, bevorzugt Monomethylcyclopentylfumarat und Monoethylcyclohexylfumarat;
- Fumarsäuremonoarylester, bevorzugt Monophenylfumarat;
- Fumarsäuremonobenzylester, bevorzugt Monobenzylfumarat;
- Citraconsäuremonoalkylester, bevorzugt Monomethylcitraconat, Monoethylcitraconat, Monopropylcitraconat und Mono-n-butyl citraconat;
- Citraconsäuremonocycloalkylester, bevorzugt Monocyclopentylcitraconat, Monocyclohexyl citraconat und Monocycloheptylcitraconat;
- Citraconsäuremonoalkylcycloalkylester, bevorzugt Monomethylcyclopentylcitraconat und Monoethylcyclohexylcitraconat;
- Citraconsäuremonoarylester, bevorzugt Monophenylcitraconat;
- Citraconsäuremonobenzylester, bevorzgut Monobenzylcitraconat;
- Itaconsäuremonoalkylester, bevorzugt Monomethylitaconat, Monoethylitaconat, Monopropyl itaconat und Mono-n-butylitaconat;
- Itaconsäuremonocycloalkylester, bevorzugt Monocyclopentylitaconat, Monocyclohexyl itaconat und Monocycloheptylitaconat;
- Itaconsäuremonoalkylcycloalkylester, bevorzugt Monomethylcyclopentylitaconat und Monoethylcyclohexylitaconat;
- Itaconsäuremonoarylester, bevorzugt Monophenylitaconat;
- Itaconsäuremonobenzylester, bevorzugt Monobenzylitaconat.
- Mesaconsäuremonoalkylester, bevorzugt Mesaconsäuremonoethylester;

Als **α,β-ungesättigte Dicarbonsäurediester** können die analogen Diester basierend auf den zuvor genannten Monoestergruppen eingesetzt werden, wobei es sich bei den Estergruppen auch um chemisch verschiedene handeln kann.

Die Anteile an Wiederholungseinheiten im teilhydrierten NBR Polymeren, die auf das konjugierte Dien und α,β-ungesättigte Nitril zurückgehen, können in weiten Bereichen schwanken. Der Anteil des oder der Summe der konjugierten Diene liegt üblicherweise im Bereich von 40 bis 90 Gew.-%, bevorzugt im Bereich von 50 bis 85 Gew. %, bezogen auf das Gesamtpolymer. Der Anteil des oder der Summe der α,β-ungesättigten Nitrile liegt üblicherweise bei 10 bis 60 Gew.-%, bevorzugt bei 15 bis 50 Gew.-%, bezogen auf das Gesamtpolymer. Die Anteile der Monomere summieren sich jeweils zu 100 Gew.-% auf. Die zusätzlichen Termonomere können je nach Art des/der Termonomere in Mengen von 0 bis 40 Gew.%, bezogen auf das Gesamtpolymer, vorliegen. In diesem Fall werden entsprechende Anteile des oder der konjugierten Diene und/oder des oder der α,β-ungesättigten Nitrile durch die Anteile der zusätzlichen Monomere ersetzt, wobei sich die Anteile aller Monomere jeweils zu 100 Gew.-% aufsummieren.

Die erfindungsgemäß eingesetzten teilhydrierten Nitrilkautschuke besitzen eine Mooney-Viskosität (ML 1+4 bei 100°C) im Bereich von 10 bis 120 Mooneyeinheiten, bevorzugt von 20 bis 100 Mooneyeinheiten. Die Bestimmung der Mooney-Viskosität erfolgt gemäß ASTM Norm D 1646.

Werden erfindungsgemäß Nitrilkautschuke mit einer Mooney-Viskosität (ML 1+4 bei 100°C) im Bereich von 30 bis 70, bevorzugt von 30 bis 50 eingesetzt, so entspricht dies einem Gewichtsmittel des Molekulargewicht Mw im Bereich von 150.000 - 500.000, bevorzugt im Bereich von 180.000-400.000, und die Polydispersität PDI = Mw/Mn, wobei Mw das Gewichtsmittel und Mn das Zahlenmittel des Molekulargewichts darstellt, liegt typischerweise im Bereich von 2,0 - 6,0, bevorzugt im Bereich von 2,0 - 4,0.

Derartige teilhydrierte Nitrilkautschuke sind dem Fachmann hinreichend bekannt und entweder käuflich erhältlich, z.B. unter der Marke Therban® der Lanxess Deutschland GmbH oder aber nach dem Fachmann geläufigen Methoden herstellbar. Die Herstellung von teilhydrierten Nitrilkautschuken erfolgt üblicherweise durch Emulsionspolymerisation gefolgt von einer Hydrierung und ist dem Fachmann geläufig und aus einer Vielzahl von Literaturstellen und Patenten bekannt.

### Vinylgruppenhaltiger Silikonkautschuk:

Als vinylgruppenhaltige Silikonkautschuke können beliebige dem Fachmann aus der Literatur bekannte eingesetzt werden. Beispielsweise kann es sich um Organopolysiloxane handeln, die zwei oder mehr Typen von Wiederholungseinheiten der allgemeinen Formel (I) enthalten, 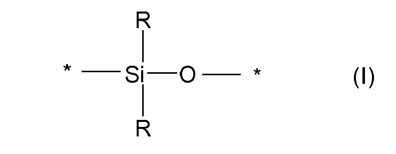 worin jeweils
- R: gleich oder verschieden sind und für einen unsubstituierten oder substituierten, monovalenten Kohlenwasserstoff-Rest mit 1 bis 6 Kohlenstoffatomen stehen, und
wobei das Organopolysiloxan in Summe 10 bis 20.000, bevorzugt 50 bis 15.000 und besonders bevorzugt 200 bis 10.000 Wiederholungseinheiten aufweist und in einem der Typen von Wiederholungseinheiten der allgemeinen Formel (I) mindestens einer der Reste R eine oder mehrere C=C Doppelbindungen enthält.

Soweit es sich bei dem/den Resten R in den Wiederholungseinheiten der allgemeinen Formel (I) nicht um den Rest handelt, der ein oder mehrere C=C Doppelbindungen enthält, können diese Reste R gleich oder verschieden sein und geradkettiges oder verzweigtes C₁-C₆-Alkyl oder Phenyl bedeuten. Der C₁-C₆-Alkylrest kann dabei ein-, zwei-, drei- oder mehr als dreifach durch Halogen, bevorzugt Fluor, substituiert sein.

Bevorzugt werden solche Organopolysiloxane eingesetzt, die einen Typ von Wiederholungseinheiten der allgemeinen Formel (II) aufweisen, 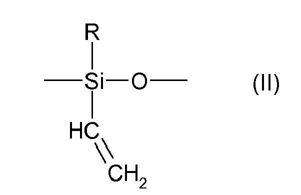 worin R die für die Formel (I) genannten Bedeutungen besitzt, sowie einen oder mehrere weitere Typen von Wiederholungseinheiten der allgemeinen Formel (I).

Es hat sich bewährt, Organopolysiloxane der allgemeinen Formel (I) einzusetzen, bei denen 0,1 bis 50 Mol%, bevorzugt 0,5 bis 20 Mol% und besonders bevorzugt 1 bis 10 Mol% aller in den Wiederholungseinheiten vorhandenen Reste R Vinylgruppen (-CH=CH₂) darstellen.

Die Struktur der Organopolysiloxane ist nicht kritisch, es können Organopolysiloxane sowohl mit geradkettiger als auch mit teilverzweigten oder cyclischen Strukturen eingesetzt werden.

Bei den Endgruppen der Organopolysiloxane handelt es sich üblicherweise um Reste des Typs 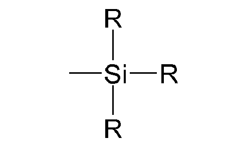 wobei die Reste R die für die allgemeine Formel (I) genannten Bedeutungen besitzen und unabhängig voneinander auch H , OR' sowie C(=O)R' darstellen können, worin R' erneut die für die Reste R zur allgemeinen Formel (I) genannten Bedeutungen besitzen kann.

Es ist auch möglich, dass ein Rest R, der an eines der kettenendständigen Si-Atomen gebunden ist, mit einem zweiten Rest R, der an das zweite endständige Si-Atom gebunden ist, gemeinsam eine Einfach-Bindung darstellt, wodurch es zur Ausbildung eines Organosiloxanrings kommt.

Aufgrund der Maßgabe, dass die einzusetzenden Silikonkautschuke immer einen Typ von Wiederholungseinheiten enthalten, der einen C=C Doppelbindungen aufweisenden Rest R enthält, handelt es sich um Copolymere oder Polymere basierend auf drei oder mehr Monomeren. Einsetzbar sind beispielsweise Copolymere, die neben den die C=C Doppelbindung(en) im Rest R enthaltenden Wiederholungseinheiten, bevorzugt Methylvinylsiloxy-Wiederholungseinheiten, Dimethylsiloxy-, Phenylmethylsiloxy, Diphenylsiloxy- und/oder 3,3,3-Trifluorpropylmethylsiloxy-Wiederholungseinheiten aufweisen.

Bevorzugt einzusetzende vinylgruppenhaltige Silikonkautschuke sind unter den folgenden allgemeinen Bezeichnungen bekannt:
- VMQ: (Vinylmethylsilikonkautschuk)
- PVMQ: (Phenylvinylmethylsilikonkautschuk)
- FVMQ: (3,3,3-Trifluorpropylvinylmethylsilikonkautschuk)

Der Anteil der jeweiligen Typen von Wiederholungseinheiten in diesen Silikonkautschuken kann in dem Fachmann bekannten Maßen variieren.

Es hat sich bewährt, VMQ, PVMQ und FVMQ wie in den nachfolgenden Formeln dargestellt einzusetzen, worin n und m gleiche oder verschiedene ganze Zahlen sind und üblicherweise jeweils im Bereich von 1 bis 9.999, bevorzugt 1 bis 7.499 und besonders bevorzugt 1 bis 4.999 liegen, worin c eine ganze Zahl ist und jeweils im Bereich von 10 bis 10.000, bevorzugt 50 bis 7500 und besonders bevorzugt 100 bis 5000 liegt, mit der Maßgabe, dass n, m und c solche Werte annehmen, dass die Summe aller Wiederholungseinheiten im jeweiligen Organopolysiloxan 10 bis 20000, bevorzugt 50 bis 15.000, besonders bevorzugt 200 bis 10.000 beträgt.

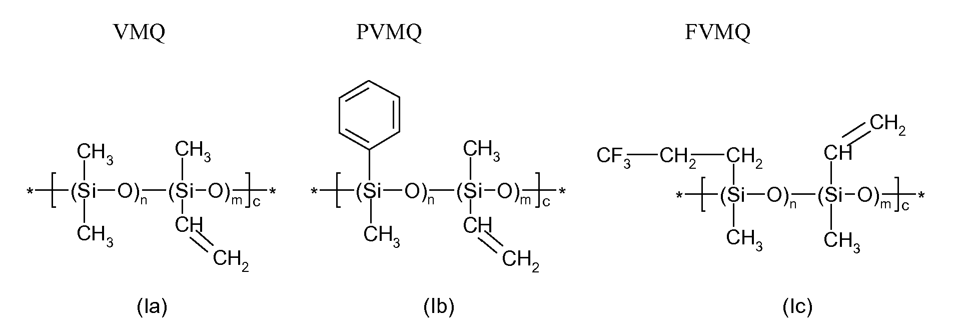

Derartige vinylgruppenhaltige Silikonkautschuke sind auch käuflich erhältlich oder nach dem Fachmann bekannten Methoden herstellbar.

Bevorzugt wird zur Herstellung des erfindungsgemäßen Kautschukblends mindestens ein teilhydrierter Nitrilkautschuk eingesetzt, der Wiederholungseinheiten enthält, die sich von mindestens einem konjugierten Dien und mindestens einem α,β-ungesättigten Nitril ableiten, wobei die C=C Doppelbindungen aus den einpolymerisierten Dien-Monomeren teilhydriert sind, bevorzugt zu mindestens 50% bis zu maximal 99 %, besonders bevorzugt zu 75 bis 98,5 %, ganz besonders bevorzugt zu 80 bis 98 % und insbesondere zu 85 bis 96%, und mindestens ein vinylgruppenhaltiges Organopolysiloxan, das zwei oder mehr Typen von Wiederholungseinheiten der allgemeinen Formel (I) enthält, 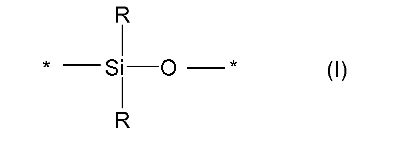
- worin R: gleich oder verschieden sind und für einen substituierten oder unsubstituierten monovalenten Kohlenwasserstoff-Rest mit 1 bis 6 Kohlenstoffatomen stehen, bevorzugt für optional durch ein- oder mehrere Fluorreste substituiertes, geradkettiges oder verzweigtes C₁-C₆ Alkyl, für Phenyl oder Vinyl,
wobei das Organopolysiloxan in Summe 1 bis 20.000 Wiederholungseinheiten, bevorzugt 50 bis 15.000, besonders bevorzugt 200 bis 10.000 Wiederholungseinheiten aufweist und ein Typ Wiederholungseinheiten der allgemeinen Formel (I) vorhanden ist, bei dem mindestens einer der Reste R ein oder mehrere C=C Doppelbindungen enthält.

Besonders bevorzugt wird zur Herstellung des erfindungsgemäßen Kautschukblends mindestens ein Acrylnitril-Butadien-Copolymer eingesetzt, bei dem 75 bis 98,5 %, ganz besonders bevorzugt zu 80 bis 98 % und insbesondere zu 85 bis 96% der C=C Doppelbindungen hydriert sind und mindestens ein vinylgruppenhaltiger Silikonkautschuk ausgewählt aus der Gruppe bestehend aus VMQ (Vinylmethylsilikonkautschuk), PVMQ (Phenylvinylmethylsilikonkautschuk) und FVMQ (3,3,3-Trifluorpropylvinylmethylsilikonkautschuk).

### Metathese-Katalysatoren:

Bei den erfindungsgemäß einzusetzenden Metathese-Katalysatoren handelt es sich bewährterweise um Komplexkatalysatoren auf Basis von Molybdän, Osmium oder Ruthenium. Diese Komplexkatalysatoren besitzen das gemeinsame Strukturmerkmal, dass sie mindestens einen Liganden aufweisen, der carbenartig an das Metall gebunden ist. In einer bevorzugten Ausführungsform weist der Komplexkatalysator zwei Carben-Liganden auf, d.h. zwei Liganden, die carbenartig an das Zentralmetall des Komplexes gebunden sind.

Eingesetzt werden kann beispielsweise ein **Katalysator der allgemeinen Formel (A),** 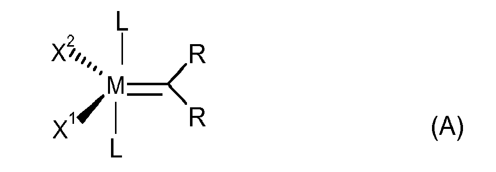 worin
- M: Osmium oder Ruthenium bedeutet,
- X¹ und X²: gleich oder verschieden sind und zwei Liganden, bevorzugt anionische Liganden, darstellen,
- L: gleiche oder verschiedene Liganden, bevorzugt neutrale Elektronen-Donoren darstellen,
- R: gleich oder verschieden sind und Wasserstoff, Alkyl, bevorzugt C₁-C₃₀-Alkyl, Cycloalkyl, bevorzugt C₃-C₂₀-Cycloalkyl, Alkenyl, bevorzugt C₂-C₂₀-Alkenyl, Alkinyl, bevorzugt C₂-C₂₀-Alkinyl, Aryl, bevorzugt C₆-C₂₄-Aryl, Carboxylat, bevorzugt C₁-C₂₀-Carboxylat, Alkoxy, bevorzugt C₁-C₂₀-Alkoxy, Alkenyloxy, bevorzugt C₂-C₂₀-Alkenyloxy, Alkinyloxy, bevorzugt C₂-C₂₀-Alkinyloxy, Aryloxy, bevorzugt C₆-C₂₄-Aryloxy, Alkoxycarbonyl, bevorzugt C₂-C₂₀-Alkoxycarbonyl, Alkylamino, bevorzugt C₁-C₃₀-Alkylanüno, Alkylthio, bevorzugt C₁-C₃₀-Alkylthio, Arylthio, bevorzugt C₆-C₂₄-Arylthio, Alkylsulfonyl, bevorzugt C₁-C₂₀-Alkylsulfonyl, oder Alkylsulfinyl, bevorzugt C₁-C₂₀-Alkylsulfinyl darstellen, wobei diese Reste alle jeweils optional durch ein oder mehrere Alkyl-, Halogen-, Alkoxy-, Aryl- oder Heteroaryl-Reste substituiert sein können, oder alternativ beide Reste R unter Einbindung des gemeinsamen C-Atoms, an das sie gebunden sind, zu einer cyclischen Gruppe verbrückt sind, die aliphatischer oder aromatischer Natur sein kann, gegebenenfalls substituiert ist und ein oder mehrere Heteroatome enthalten kann.

In bevorzugten Katalysatoren der allgemeinen Formel (A) ist der eine Rest R Wasserstoff und der andere Rest R bedeutet C₁-C₂₀-Alkyl, C₃-C₁₀-Cycloalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₃₀-Alkylamino, C₁-C₃₀-Alkylthio, C₆-C₂₄-Arylthio, C₁-C₂₀-Alkylsulfonyl oder C₁-C₂₀-Alkylsulfinyl, wobei diese Reste alle jeweils durch ein oder mehrere Alkyl-, Halogen-, Alkoxy-, Aryl- oder Heteroaryl-Reste substituiert sein können.

In den Katalysatoren der allgemeinen Formel (A) sind **X¹ und X²** gleich oder verschieden und stellen zwei Liganden, bevorzugt anionische Liganden, dar.

X¹ und X² können beispielsweise Wasserstoff, Halogen, Pseudohalogen, geradkettige oder verzweigte C₁-C₃₀-Alkyl, C₆-C₂₄-Aryl, C₁-C₂₀-Alkoxy, C₆-C₂₄-Aryloxy, C₃-C₂₀-Alkyldiketonat, C₆-C₂₄-Aryldiketonat, C₁-C₂₀-Carboxylat, C₁-C₂₀-Alkylsulfonat, C₆-C₂₄-Arylsulfonat, C₁-C₂₀-Alkylthiol, C₆-C₂₄-Arylthiol, C₁-C₂₀-Alkylsulfonyl oder C₁-C₂₀-Alkylsulfinyl-Reste bedeuten.

Die vorgenannten Reste X¹ und X² können ferner durch ein oder mehrere weitere Reste substituiert sein, beispielsweise durch Halogen, bevorzugt Fluor, C₁-C₁₀-Alkyl, C₁-C₁₀-Alkoxy oder C₆-C₂₄-Aryl, wobei auch diese Reste gegebenenfalls wiederum durch ein oder mehrere Substituenten substituiert sein können, die aus der Gruppe umfassend Halogen, bevorzugt Fluor, C₁-C₅-Alkyl, C₁-C₅-Alkoxy und Phenyl ausgewählt sind. In einer bevorzugten Ausführungsform sind X¹ und X² gleich oder verschieden und bedeuten Halogen, insbesondere Fluor, Chlor, Brom oder Jod, Benzoat, C₁-C₅-Carboxylat, C₁-C₅-Alkyl, Phenoxy, C₁-C₅-Alkoxy, C₁-C₅-Alkylthiol, C₆-C₂₄-Arylthiol, C₆-C₂₄-Aryl oder C₁-C₅-Alkylsulfonat. In einer besonders bevorzugten Ausführungsform sind X¹ und X² identisch und bedeuten Halogen, insbesondere Chlor, CF₃COO, CH₃COO, CFH₂COO, (CH₃)₃CO, (CF₃)₂(CH₃)CO, (CF₃)(CH₃)₂CO, PhO (Phenoxy), MeO (Methoxy), EtO (Ethoxy), Tosylat (p-CH₃-C₆H₄-SO₃), Mesylat (2,4,6-Trimethylphenyl) oder CF₃SO₃ (Trifluormethansulfonat).

In der allgemeinen Formel (A) sind L gleiche oder verschiedene Liganden und sind bevorzugt neutrale Elektronen-Donoren.

Die beiden Liganden L können beispielsweise unabhängig voneinander einen Phosphin-, sulfonierten Phosphin-, Phosphat-, Phosphinit-, Phosphonit-, Arsin-, Stibin-, Ether-, Amin-, Amid-, Sulfoxid-, Carboxyl-, Nitrosyl-, Pyridin-, Thioether- oder einen Imidazolidin ("Im")-Liganden darstellen.

Bevorzugt bedeuten die beiden Liganden L unabhängig voneinander einen C₆-C₂₄-Aryl-, C₁-C₁₀-Alkyl- oder C₃-C₂₀-Cycloalkyl-Phosphin-Liganden, einen sulfonierten C₆-C₂₄-Aryl- oder sulfonierten C₁-C₁₀-Alkyl-Phosphin-Liganden, einen C₆-C₂₄-Aryl- oder C₁-C₁₀-Alkyl-Phosphinit-Liganden, einen C₆-C₂₄-Aryl- oder C₁-C₁₀-Alkylphosphonit-Liganden, einen C₆-C₂₄-Aryl- oder C₁-C₁₀-Alkylphosphit-Liganden, einen C₆-C₂₄-Aryl- oder C₁-C₁₀-Alkylarsin-Liganden, einen C₆-C₂₄-Aryl- oder C₁-C₁₀-Alkylamin-Liganden, einen Pyridin-Liganden, einen C₆-C₂₄-Aryl- oder C₁-C₁₀-Alkyl-Sulfoxid-Liganden, einen C₆-C₂₄-Aryl- oder C₁-C₁₀-Alkyl-Ether-Liganden oder einen C₆-C₂₄-Aryl- oder C₁-C₁₀-Alkylamid-Liganden, die alle jeweils durch eine Phenylgruppe substituiert sein können, die wiederum gegebenenfalls durch einen Halogen-, C₁-C₅-Alkyl- oder C₁-C₅-AlkoxyRest substituiert ist.

Die Bezeichnung "Phosphin" schließt beispielsweise PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(iso-Propyl)₃, P(CHCH₃(CH₂CH₃))₃, P(Cyclopentyl)₃, P(Cyclohexyl)₃, P(Neopentyl)₃ und P(Neophenyl)₃ ein.

Die Bezeichnung "Phosphinit" schließt beispielsweise Triphenylphosphinit, Tricyclohexylphosphinit, Triisopropylphosphinit und Methyldiphenylphosphinit ein.

Die Bezeichnung "Phosphit" schließt beispielsweise Triphenylphosphit, Tricyclohexylphosphit, Tri-tert.-Butylphosphit, Triisopropylphosphit und Methyldiphenylphosphit ein.

Die Bezeichnung "Stibin" schließt beispielsweise Triphenylstibin, Tricyclohexylstibin und Trimethylstiben ein.

Die Bezeichnung "Sulfonat" schließt z.B. Trifluoromethansulfonat, Tosylat und Mesylat ein.

Die Bezeichnung "Sulfoxid" schließt beispielsweise (CH₃)₂S(=O) und (C₆H₅)₂S=O ein.

Die Bezeichnung "Thioether" schließt beispielsweise CH₃SCH₃, C₆H₅SCH₃, CH₃OCH₂CH₂SCH₃ und Tetrahydrothiophen ein.

Die Bezeichnung "Pyridin" soll im Rahmen dieser Anmeldung als Oberbegriff sämtliche stickstoffhaltigen Liganden einschließen wie sie z.B. von Grubbs in der WO-A-03/011455 genannten werden. Beispiele hierfür sind: Pyridin, Picoline (α-, β-, und γ-Picolin), Lutidine (2,3-, 2,4-, 2,5-, 2,6-, 3,4- und 3,5-Lutidin), Collidin (2,4,6-Trimethylpyridin), Trifluormethylpyridin, Phenylpyridin, 4-(Dimethylamino)pyridin, Chlorpyridine, Brompyridine, Nitropyridine, Chinolin, Pyrimidin, Pyrrol, Imidazol und Phenylimidazol.

Handelt es sich bei einem oder beiden der Liganden L um einen Imidazolidinrest (Im), so weist dieser üblicherweise eine Struktur der allgemeinen Formeln (IIa) oder (IIb) auf, 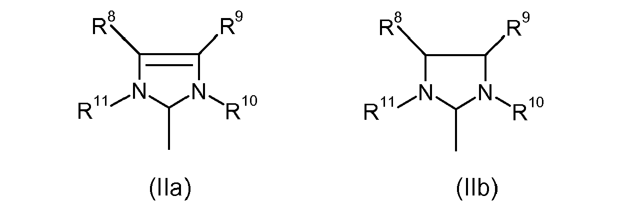 worin
- R⁸, R⁹, R¹⁰, R¹¹: gleich oder verschieden sind und Wasserstoff, geradkettiges oder verzweigtes C₁-C₃₀-Alkyl, C₃-C₂₀-Cycloalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₀-Aryloxy, C₂-C₂₀-Alkoxycarbonyl, C₁-C₂₀-Alkylthio, C₆-C₂₀-Arylthio, C₁-C₂₀-Alkylsulfonyl, C₁-C₂₀-Alkylsulfonat, C₆-C₂₀-Arylsulfonat oder C₁-C₂₀-Alkylsulfinyl bedeuten.

Optional sind einer oder mehrere der Reste R⁸, R⁹, R¹⁰, R¹¹ unabhängig voneinander durch einen oder mehrere Substituenten, vorzugsweise geradkettiges oder verzweigtes C₁-C₁₀-Alkyl, C₃-C₈-Cycloalkyl, C₁-C₁₀-Alkoxy oder C₆-C₂₄-Aryl substituiert, wobei diese vorgenannten Substituenten wiederum durch ein oder mehrere Reste, vorzugsweise ausgewählt aus der Gruppe Halogen, insbesondere Chlor oder Brom, C₁-C₅-Alkyl, C₁-C₅-Alkoxy und Phenyl substituiert sein können. Nur zur Klarstellung sei hinzugefügt, dass die in den allgemeinen Formeln (IIa) und (IIb) im Rahmen dieser Anmeldung dargestellten Strukturen des Imidazolidinrests mit den in der Literatur für diesen Imidazolidinrest (Im) häufig auch zu findenden Strukturen (IIa') und (IIb'), die den Carben-Charakter des Imidazolidinrests hervorheben, gleichbedeutend sind. Dies gilt entsprechend auch für die zugehörigen bevorzugten, nachfolgend noch dargestellten Strukturen (IIIa)-(IIIf).

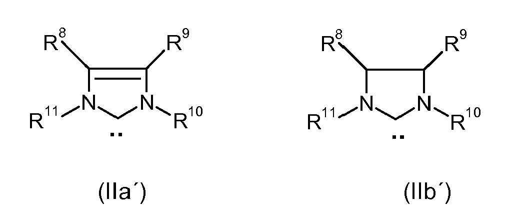

In einer bevorzugten Ausführungsform der Katalysatoren der allgemeinen Formel (A) bedeuten R⁸ und R⁹ unabhängig voneinander Wasserstoff, C₆-C₂₄-Aryl, besonders bevorzugt Phenyl, geradkettiges oder verzweigtes C₁-C₁₀-Alkyl, besonders bevorzugt Propyl oder Butyl, oder bilden zusammen unter Einschluss der Kohlenstoffatome, an die sie gebunden sind, einen Cycloalkyl- oder Aryl-Rest, wobei alle vorgenannten Reste gegebenenfalls wiederum durch ein oder mehrere weitere Reste substituiert sein können, ausgewählt aus der Gruppe umfassend geradkettiges oder verzweigtes C₁-C₁₀-Alkyl, C₁-C₁₀-Alkoxy, C₆-C₂₄-Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

In einer bevorzugten Ausführungsform der Katalysatoren der allgemeinen Formel (A) sind ferner die Reste R¹⁰ und R¹¹ gleich oder verschieden und bedeuten geradkettiges oder verzweigtes C₁-C₁₀-Alkyl, besonders bevorzugt i-Propyl oder Neopentyl, C₃-C₁₀-Cycloalkyl, bevorzugt Adamantyl, C₆-C₂₄-Aryl, besonders bevorzugt Phenyl, C₁-C₁₀-Alkylsulfonat, besonders bevorzugt Methansulfonat, C₆-C₁₀-Arylsulfonat, besonders bevorzugt p-Toluolsulfonat.

Gegebenenfalls sind die vorgenannten Reste als Bedeutungen von R¹⁰ und R¹¹ substituiert durch einen oder mehrere weitere Reste ausgewählt aus der Gruppe umfassend geradkettiges oder verzweigtes C₁-C₅-Alkyl, insbesondere Methyl, C₁-C₅-Alkoxy, Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

Insbesondere können die Reste R¹⁰ und R¹¹ gleich oder verschieden sein und bedeuten i-Propyl, Neopentyl, Adamantyl, Mesityl oder 2,6-Diisopropylphenyl.

Besonders bevorzugte Imidazolidinreste (Im) haben die nachfolgenden Strukturen (IIIa) bis (IIIf), wobei Ph jeweils für einen Phenyl-Rest, Bu für einen Butyl-Rest und Mes jeweils für 2,4,6-Trimethylphenyl-Rest steht oder Mes alternativ in allen Fällen für 2,6-Diisopropylphenyl steht.

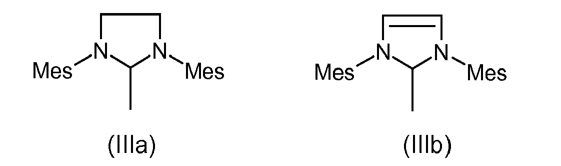

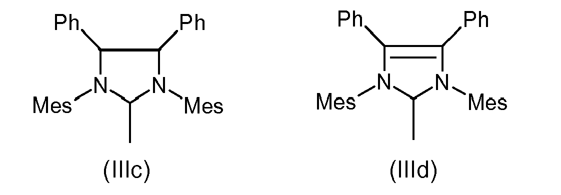

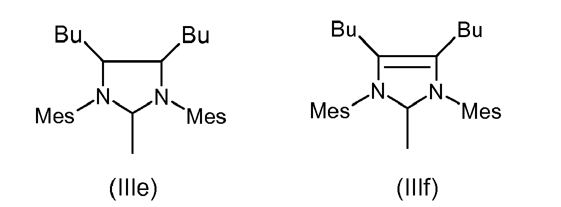

Verschiedenste Vertreter der Katalysatoren der Formel (A) sind prinzipiell bekannt, so z.B. aus der WO-A-96/04289 und der WO-A-97/06185.

Alternativ zu den bevorzugten Im-Resten steht einer oder beide Liganden L in der allgemeinen Formel (A) bevorzugt auch für gleiche oder verschiedene Trialkylphosphin-Liganden, worin mindestens eine der Alkylgruppen eine sekundäre Alkylgruppe oder ein Cycloalkylgruppe darstellt, bevorzugt iso-Propyl, iso-Butyl, sec-Butyl, Neopentyl, Cyclopentyl oder Cyclohexyl.

Besonders bevorzugt stehen in der allgemeinen Formel (A) einer oder beide Liganden L für einen Trialkylphosphin-Liganden, worin mindestens eine der Alkylgruppen eine sekundäre Alkylgruppe oder ein Cycloalkylgruppe darstellt, bevorzugt iso-Propyl, iso-Butyl, sec-Butyl, Neopentyl, Cyclopentyl oder Cyclohexyl.

Besonders bevorzugt sind Katalysatoren, die unter die allgemeine Formel (A) fallen, und die Strukturen (IV) (Grubbs (I)-Katalysator) und (V) (Grubbs (II)-Katalysator), wobei Cy für Cyclohexyl steht, besitzen.

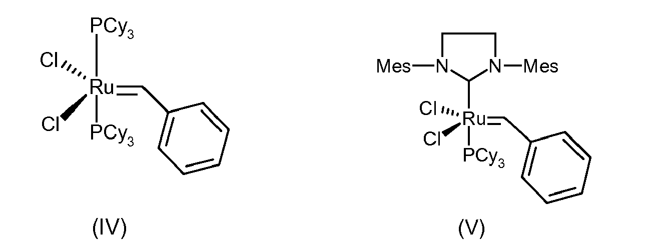

In einer weiteren Ausführungsform wird ein **Katalysator der allgemeinen Formel (A1)** eingesetzt, worin 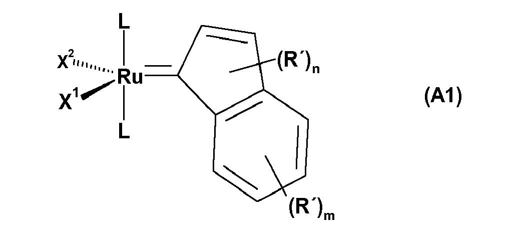
- X¹, X² und L: die gleichen allgemeinen, bevorzugten und besonders bevorzugten Bedeutungen haben können wie in der allgemeinen Formel (A),
- n: gleich 0, 1 oder 2 ist,
- m: gleich 0, 1, 2, 3 oder 4 ist und
- R': gleich oder verschieden sind und Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Reste bedeuten, die alle jeweils durch ein oder mehrere Alkyl-, Halogen-, Alkoxy-, Aryl- oder HeteroarylReste substituiert sein können.

Als bevorzugter Katalysator, der unter die allgemeine Formel (A1) fällt, kann beispielsweise derjenige der folgenden Formel (VI) eingesetzt werden, wobei Mes jeweils für 2,4,6-Trimethylphenyl und Ph für Phenyl steht.

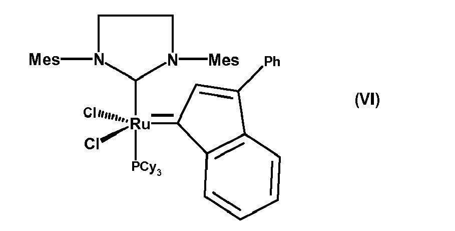

Dieser in der Literatur auch als "Nolan-Katalysator" bezeichnete Katalysator ist beispielsweise aus WO-A-2004/112951 bekannt.

Bewährt hat sich auch der Einsatz eines **Katalysator der allgemeinen Formel (B),** 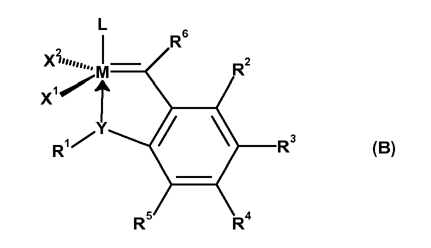 worin
- M: Ruthenium oder Osmium bedeutet,
- X¹ und X²: gleiche oder verschiedene Liganden, bevorzugt anionische Liganden sind,
- Y: Sauerstoff (O), Schwefel (S), einen Rest N-R¹ oder einen Rest P-R¹ bedeutet, wobei R¹ die nachfolgend genannten Bedeutungen besitzt,
- R¹: einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest darstellt, die alle jeweils optional durch ein oder mehrere Alkyl-, Halogen-, Alkoxy-, Aryl- oder Heteroaryl-Reste substituiert sein können,
- R², R³, R⁴ und R⁵: gleich oder verschieden sind und Wasserstoff, organische oder anorganische Reste darstellen,
- R⁶: H, einen Alkyl-, Alkenyl-, Alkinyl- oder einen Aryl-Rest bedeutet und
- L: ein Ligand ist, der die gleichen Bedeutungen besitzt wie für die Formel (A) genannt.

Die Katalysatoren der allgemeinen Formel (B) sind prinzipiell bekannt. Vertreter dieser Verbindungsklasse sind die Katalysatoren, die von Hoveyda et al. in US 2002/0107138 A1 und Angew. Chem. Int. Ed. 2003, 42, 4592 beschrieben sind, und die Katalysatoren, die von Grela in WO-A-2004/035596**,** Eur. J. Org. Chem 2003, 963-966 und Angew. Chem. Int. Ed. 2002, 41, 4038 sowie in J. Org. Chem. 2004, 69, 6894-96 und Chem. Eur. J 2004, 10, 777-784 beschrieben werden. Die Katalysatoren sind käuflich erhältlich bzw. gemäß den angegebenen Literaturstellen herstellbar.

In den Katalysatoren der allgemeinen Formel (B) steht L für einen Liganden, der üblicherweise eine Elektronen-Donor-Funktion besitzt und die gleichen allgemeinen, bevorzugten und besonders bevorzugten Bedeutungen annehmen kann wie L in der allgemeinen Formel (A).

Darüber hinaus gilt, dass L in der allgemeinen Formel (B) bevorzugt einen P(R⁷)₃ Rest, wobei R⁷ unabhängig voneinander C₁-C₆ Alkyl, C₃-C₈-Cycloalkyl oder Aryl bedeuten, oder aber einen gegebenenfalls substituierten Imidazolidinrest ("Im") darstellt.

**C₁-C₆-Alkyl** steht beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl und n-Hexyl.

**C₃-C₈-Cycloalkyl** umfasst Cyclopropyl, Cyclobutyl, Cylopentyl, Cyclohexyl, Cycloheptyl und Cyclooctyl.

**Aryl** umfasst einen aromatischen Rest mit 6 bis 24 Gerüstkohlenstoffatomen. Als bevorzugte mono-, b i- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

Der Imidazolidinrest (Im) weist eine Struktur der allgemeinen Formeln (IIa) oder (IIb) auf, 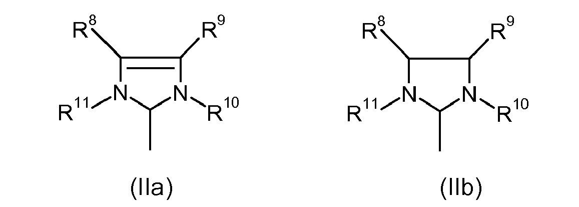 worin
- R⁸, R⁹, R¹⁰, R¹¹: gleich oder verschieden sind und Wasserstoff, geradkettiges oder verzweigtes C₁-C₃₀-Alkyl, C₃-C₂₀-Cycloalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₀-Aryloxy, C₂-C₂₀-Alkoxycarbonyl, C₁-C₂₀-Alkylthio, C₆-C₂₀-Arylthio, C₁-C₂₀-Alkylsulfonyl, C₁-C₂₀-Alkylsulfonat, C₆-C₂₀-Arylsulfonat oder C₁-C₂₀-Alkylsulfinyl bedeuten.

Gegebenenfalls kann einer oder mehrere der Reste R⁸, R⁹, R¹⁰, R¹¹ unabhängig voneinander durch einen oder mehrere Substituenten, vorzugsweise geradkettiges oder verzweigtes C₁-C₁₀-Alkyl, C₃-C₈-Cycloalkyl, C₁-C₁₀-Alkoxy oder C₆-C₂₄-Aryl substituiert sein, wobei diese vorgenannten Substituenten wiederum durch ein oder mehrere Reste, vorzugsweise ausgewählt aus der Gruppe Halogen, insbesondere Chlor oder Brom, C₁-C₅-Alkyl, C₁-C₅-Alkoxy und Phenyl substituiert sein können.

Bewährt hat es sich insbesondere, Katalysatoren der allgemeinen Formel (B) einzusetzen, worin R⁸ und R⁹ unabhängig voneinander Wasserstoff, C₆-C₂₄-Aryl, besonders bevorzugt Phenyl, geradkettiges oder verzweigtes C₁-C₁₀-Alkyl, besonders bevorzugt Propyl oder Butyl, bedeuten oder zusammen unter Einschluss der Kohlenstoffatome, an die sie gebunden sind, einen Cycloalkyl- oder Aryl-Rest bilden, wobei alle vorgenannten Reste gegebenenfalls wiederum durch ein oder mehrere weitere Reste substituiert sein können, ausgewählt aus der Gruppe umfassend geradkettiges oder verzweigtes C₁-C₁₀-Alkyl, C₁-C₁₀-Alkoxy, C₆-C₂₄-Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

In einer weiteren bevorzugten Ausführungsform wird ein Katalysator der allgemeinen Formel (B) eingesetzt, worin die Reste R¹⁰ und R¹¹ gleich oder verschieden sind und geradkettiges oder verzweigtes C₁-C₁₀-Alkyl, besonders bevorzugt i-Propyl oder Neopentyl, C₃-C₁₀-Cycloalkyl, bevorzugt Adamantyl, C₆-C₂₄-Aryl, besonders bevorzugt Phenyl, C₁-C₁₀-Alkylsulfonat, besonders bevorzugt Methansulfonat, oder C₆-C₁₀-Arylsulfonat, besonders bevorzugt p-Toluolsulfonat bedeuten.

Gegebenenfalls sind die vorgenannten Reste als Bedeutungen von R¹⁰ und R¹¹ substituiert durch einen oder mehrere weitere Reste ausgewählt aus der Gruppe umfassend geradkettiges oder verzweigtes C₁-C₅-Alkyl, insbesondere Methyl, C₁-C₅-Alkoxy, Aryl und eine funktionelle Gruppe ausgewählt aus der Gruppe von Hydroxy, Thiol, Thioether, Keton, Aldehyd, Ester, Ether, Amin, Imin, Amid, Nitro, Carbonsäure, Disulfid, Carbonat, Isocyanat, Carbodiimid, Carboalkoxy, Carbamat und Halogen.

Insbesondere können die Reste R¹⁰ und R¹¹ gleich oder verschieden sein und bedeuten i-Propyl, Neopentyl, Adamantyl oder Mesityl.

Besonders bevorzugte Imidazolidinreste (Im) haben die bereits zuvor genannten Strukturen (IIIa-IIIf), wobei Mes jeweils für 2,4,6-Trimethylphenyl steht.

In den Katalysatoren der allgemeinen Formel (B) sind **X¹ und X²** gleich oder verschieden und können beispielsweise Wasserstoff, Halogen, Pseudohalogen, geradkettige oder verzweigte C₁-C₃₀-Alkyl, C₆-C₂₄-Aryl, C₁-C₂₀-Alkoxy, C₆-C₂₄-Aryloxy, C₃-C₂₀-Alkyldiketonat, C₆-C₂₄-Aryldiketonat, C₁-C₂₀-Carboxylat, C₁-C₂₀-Alkylsulfonat, C₆-C₂₄-Arylsulfonat, C₁-C₂₀-Alkylthiol, C₆-C₂₄-Arylthiol, C₁-C₂₀-Alkylsulfonyl oder C₁-C₂₀-Alkylsulfinyl bedeuten.

Die vorgenannten Reste X¹ und X² können ferner durch ein oder mehrere weitere Reste substituiert sein, beispielsweise durch Halogen, bevorzugt Fluor, C₁-C₁₀-Alkyl, C₁-C₁₀-Alkoxy oder C₆-C₂₄-Aryl-Reste, wobei auch die letzteren Reste gegebenenfalls wiederum durch ein oder mehrere Substituenten substituiert sein können, die aus der Gruppe umfassend Halogen, bevorzugt Fluor, C₁-C₅-Allcyl, C₁-C₅-Alkoxy und Phenyl ausgewählt sind.

In einer bevorzugten Ausführungsform sind X¹ und X² gleich oder verschieden und bedeuten Halogen, insbesondere Fluor, Chlor, Brom oder Jod, Benzoat, C₁-C₅-Carboxylat, C₁-C₅-Alkyl, Phenoxy, C₁-C₅-Alkoxy, C₁-C₅-Alkylthiol, C₆-C₂₄-Arylthiol, C₆-C₂₄-Aryl oder C₁-C₅-Alkylsulfonat.

In einer besonders bevorzugten Ausführungsform sind X¹ und X² identisch und bedeuten Halogen, insbesondere Chlor, CF₃COO, CH₃COO, CFH₂COO, (CH₃)₃CO, (CF₃)₂(CH₃)CO, (CF₃)(CH₃)₂CO, PhO (Phenoxy), MeO (Methoxy), EtO (Ethoxy), Tosylat (p-CH₃-C₆H₄-SO₃), Mesylat (2,4,6-Trimethylphenyl) oder CF₃SO₃ (Trifluormethansulfonat).

In der allgemeinen Formel (B) bedeutet der **Rest R¹** einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest, die alle jeweils optional durch ein oder mehrere Alkyl,-, Halogen-, Alkoxy-, Aryl- oder Heteroaryl-Reste substituiert sein können.

Üblicherweise bedeutet der Rest R¹ einen C₁-C₃₀-Alkyl, C₃-C₂₀-Cylcoalkyl, C₂-C₂₀-Alkenyl, C₂-C₂₀-Alkinyl, C₆-C₂₄-Aryl, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylamino-, C₁-C₂₀-Alkylthio, C₆-C₂₄-Arylthio, C₁-C₂₀-Alkylsulfonyl oder C₁-C₂₀-Alkylsulfinyl Rest, die alle jeweils optional durch ein oder mehrere Alkyl-, Halogen-, Alkoxy-, Aryl- oder Heteroaryl-Reste substituiert sein können.

Bevorzugt steht R¹ für einen C₃-C₂₀-Cylcoalkyl-Rest, einen C₆-C₂₄-Aryl-Rest oder einen geradkettigen oder verzweigten C₁-C₃₀-Alkyl-Rest, wobei letztere gegebenenfalls durch ein oder mehrere Doppel- oder Dreifachbindungen oder auch ein oder mehrere Heteroatome, bevorzugt Sauerstoff oder Stickstoff, unterbrochen sein kann. Besonders bevorzugt steht R¹ für einen geradkettigen oder verzweigten C₁-C₁₂-Alkyl-Rest.

Der C₃-C₂₀-Cycloalkyl-Rest umfasst beispielsweise Cyclopropyl, Cyclobutyl, Cylopentyl, Cyclohexyl, Cycloheptyl und Cyclooctyl.

Bei dem C₁-C₁₂-Alkyl-Rest kann es sich beispielsweise um Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, n-Hexyl, n-Heptyl, n-Octyl, n-Decyl oder n-Dodecyl handeln. Insbesondere steht R¹ für Methyl oder Isopropyl.

Der C₆-C₂₄-Aryl-Rest steht für einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

In der allgemeinen Formel (B) sind die **Reste R², R³, R⁴ und R⁵** gleich oder verschieden und können Wasserstoff, organische oder anorganische Reste darstellen.

In einer geeigneten Ausführungsform sind R², R³, R⁴, R⁵ gleich oder verschieden und bedeuten Wasserstoff, Halogen, Nitro, CF₃, Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio, Alkylsulfonyl- oder Alkylsulfinyl-Reste darstellen, die alle jeweils optional durch ein oder mehrere Alkyl-, Alkoxy-, Halogen-, Aryl- oder Heteroaryl-Reste substituiert sein können.

Üblicherweise sind R², R³, R⁴, R⁵ gleich oder verschieden und bedeuten Wasserstoff, Halogen, bevorzugt Chlor oder Brom, Nitro, CF₃, C₁-C₃₀-Alkyl, C₃-C₂₀-Cylcoalkyl, C₂-C₂o-Alkenyl, C₂-C₂₀-Alkinyl, C₆-C₂₄-Aryl, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylamino-, C₁-C₂₀-Alkylthio, C₆-C₂₄-Arylthio, C₁-C₂₀-Alkylsulfonyl oder C₁-C₂₀-Alkylsulfinyl Reste, die alle jeweils optional durch ein oder mehrere C₁-C₃₀-Alkyl-, C₁-C₂₀-Alkoxy-, Halogen-, C₆-C₂₄-Aryl- oder Heteroaryl-Reste substituiert sein können.

In einer besonders bewährten Ausführungsform sind R², R³, R⁴, R⁵ sind gleich oder verschieden und stehen für Nitro, geradkettige oder verzweigte C₁-C₃₀-Alkyl-, C₅-C₂₀-Cylcoalkyl-, geradkettige oder verzweigte C₁-C₂₀-Alkoxy-Reste oder C₆-C₂₄-Aryl-Reste, bevorzugt Phenyl oder Naphthyl. Die C₁-C₃₀-Alkyl-Reste sowie C₁-C₂₀-Alkoxy-Reste können optional durch ein oder mehrere Doppel- oder Dreifachbindungen oder auch ein oder mehrere Heteroatome, bevorzugt Sauerstoff oder Stickstoff, unterbrochen sein.

Ferner können auch zwei oder mehr der Reste R², R³, R⁴ oder R⁵ über aliphatische oder aromatische Strukturen verbrückt sein. R³ und R⁴ können beispielsweise unter Einbeziehung der Kohlenstoff-Atome, an die sie im Phenylring der Formel (B) gebunden sind, einen ankondensierten Phenylring bilden, so dass insgesamt eine Naphthylstruktur resultiert.

In der allgemeinen Formel (B) bedeutet der **Rest R⁶** Wasserstoff, einen Alkyl-, Alkenyl-, Alkinyl- oder einen Aryl-Rest. Bevorzugt bedeutet R⁶ H, einen C₁-C₃₀-Alkyl, einen C₂-C₂₀-Alkenyl-, einen C₂-C₂₀-Alkinyl oder einen C₆-C₂₄-Aryl-Rest. Besonders bevorzugt ist R⁶ Wasserstoff.

Ferner geeignet sind **Katalysatoren gemäß der allgemeinen Formel (B1),** 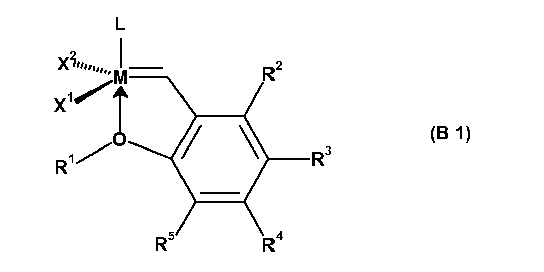 worin
- M, L, X¹, X², R¹, R², R³, R⁴ und R⁵: die für die allgemeine Formel (B) genannten allgemeinen, bevorzugten und besonders bevorzugten Bedeutungen besitzen können.

Die Katalysatoren der allgemeinen Formel (B1) sind z.B. aus US 2002/0107138 A1 (Hoveyda et al.) prinzipiell bekannt und können nach dort angegebenen Herstellverfahren erhalten werden.

Besonders bevorzugt sind Katalysatoren der allgemeinen Formel (B1), wobei
- M: Ruthenium darstellt,
- X¹ und X²: gleichzeitig Halogen, insbesondere gleichzeitig Chlor bedeuten,
- R¹: für einen geradkettigen oder verzweigten C₁-C₁₂ Alkylrest steht,
- R², R³, R⁴, R⁵: die für die allgemeine Formel (B) genannten allgemeinen und bevorzugten Bedeutungen besitzen und
- L: die für die allgemeine Formel (B) genannten allgemeinen und bevorzugten Bedeutungen besitzt.

Insbesondere bevorzugt sind Katalysatoren der allgemeinen Formel (B1), wobei
- M: Ruthenium darstellt,
- X¹ und X²: gleichzeitig Chlor bedeuten,
- R¹: für einen Isopropyl-Rest steht,
- R², R³, R⁴, R⁵: alle Wasserstoff bedeuten und
- L: einen gegebenenfalls substituierten Imidazolidin-Rest der Formeln (IIa) oder (IIb) darstellt, 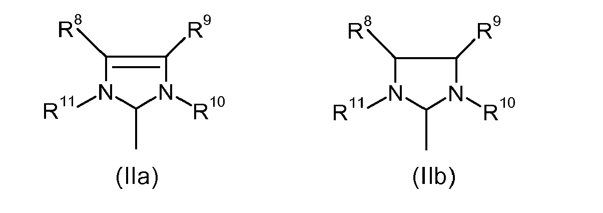
worin
- R⁸, R⁹, R¹⁰, R¹¹: gleich oder verschieden sind und Wasserstoff, geradkettiges oder verzweigtes C₁-C₃₀-Alkyl, C₃-C₂₀-Cylcoalkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylthio, C₆-C₂₄-Arylthio, C₁-C₂₀-Alkylsulfonyl, C₁-C₂₀-Alkylsulfonat, C₆-C₂₄-Arylsulfonat oder C₁-C₂₀-Alkylsulfinyl bedeuten, wobei die vorgenannten Reste jeweils durch einen oder mehrere Substituenten, vorzugsweise geradkettiges oder verzweigtes C₁-C₁₀-Alkyl, C₃-C₈-Cycloalkyl, C₁-C₁₀-Alkoxy oder C₆-C₂₄-Aryl substituiert sein können, wobei auch diese vorgenannten Substituenten wiederum durch ein oder mehrere Reste, vorzugsweise ausgewählt aus der Gruppe Halogen, insbesondere Chlor oder Brom, C₁-C₅-Alkyl, C₁-C₅-Alkoxy und Phenyl substituiert sein können.

Ganz besonders bevorzugt ist ein Katalysator, der unter die allgemeine Strukturformel (B1) fällt und die Formel (VII) besitzt, wobei Mes jeweils für 2,4,6-Trimethylphenyl steht.

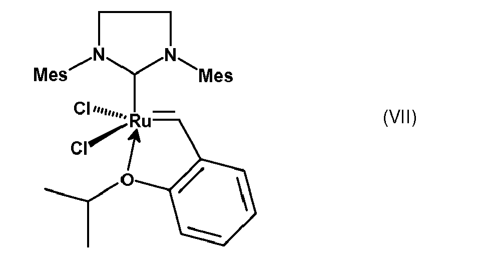

Dieser Katalysator (VII) wird in der Literatur auch als "Hoveyda-Katalysator" bezeichnet.

Weiterhin geeignete Katalysatoren sind solche, die unter die allgemeine Strukturformel (B1) fallen und eine der folgenden Formeln (VIII), (IX), (X), (XI), (XII), (XIII), (XIV) und (XV) besitzen, wobei Mes jeweils 2,4,6-Trimethylphenyl bedeutet.

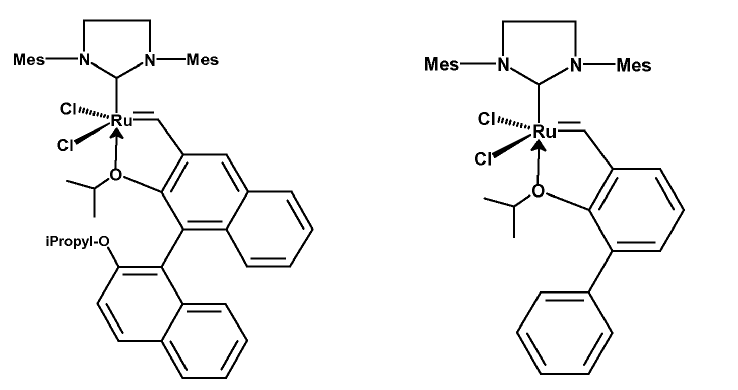

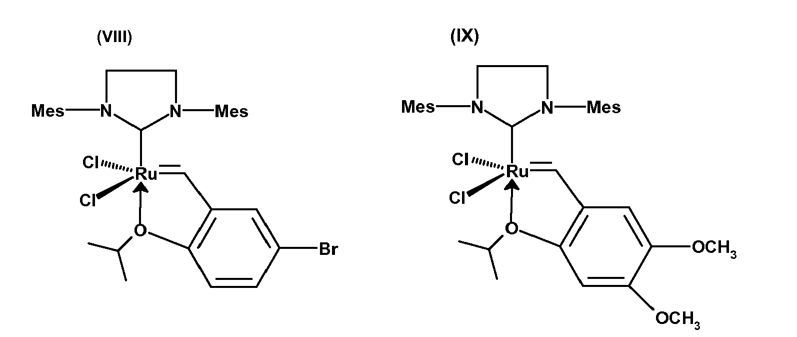

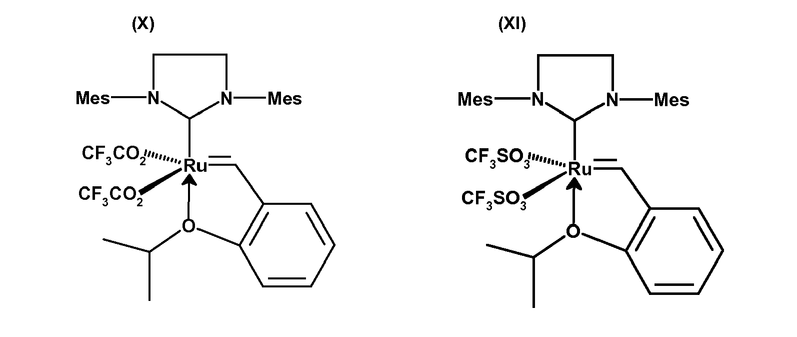

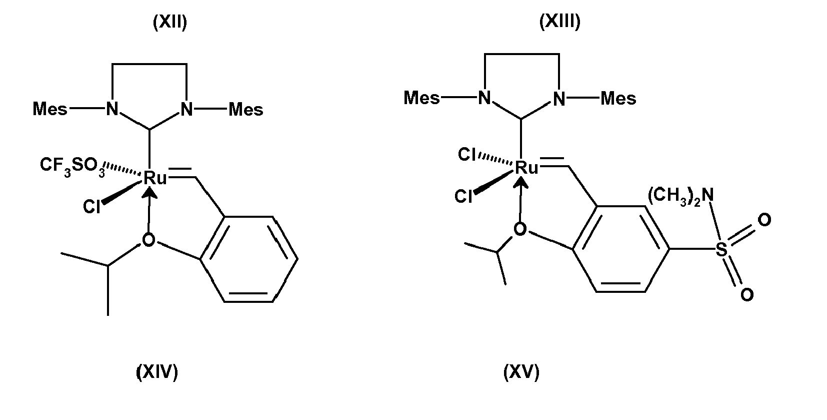

Ein weiterer geeigneter Katalysator besitzt die **allgemeine Formel (B2),** 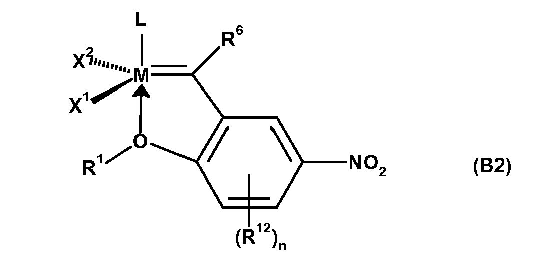 worin
- M, L, X¹,X², R¹ und R⁶: die für die Formel (B) genannten allgemeinen und bevorzugten Bedeutungen haben,
- R¹²: gleich oder verschieden sind und die für die Reste R², R³, R⁴ und R⁵ in der Formel (B) genannten allgemeinen und bevorzugten Bedeutungen, ausgenommen Wasserstoff, besitzen und
- n: gleich 0, 1, 2 oder 3 ist.

Die Katalysatoren der allgemeinen Formel (B2) sind beispielsweise aus WO-A-2004/035596 (Grela) prinzipiell bekannt und können nach dort angegebenen Herstellverfahren erhalten werden.

Besonders bevorzugt sind Katalysatoren der allgemeinen Formel (B2), wobei
- M: Ruthenium darstellt,
- X¹ und X²: gleichzeitig Halogen, insbesondere gleichzeitig Chlor bedeuten,
- R¹: für einen geradkettigen oder verzweigten C₁-C₁₂ Alkylrest steht,
- R¹²: die für die allgemeine Formel (B2) genannten Bedeutungen besitzt,
- n: gleich 0, 1, 2 oder 3 ist,
- R⁶: Wasserstoff bedeutet und
- L: die für die allgemeine Formel (B) genannten Bedeutungen besitzt,

Insbesondere bevorzugt sind Katalysatoren der allgemeinen Formel (B2), wobei
- M: Ruthenium darstellt,
- X¹ und X²: gleichzeitig Chlor bedeuten,
- R¹: für einen Isopropyl-Rest steht,
- n: gleich 0 ist und
- L: einen gegebenenfalls substituierten Imidazolidin-Rest der Formeln (IIa) oder (IIb) darstellt, worin R⁸, R⁹, R¹⁰, R¹¹ gleich oder verschieden sind und die für die insbesondere bevorzugten Katalysatoren der allgemeinen Formel (B1) genannten Bedeutungen besitzen.

Besonders geeignet ist ein Katalysator der nachfolgenden Struktur (XVI)

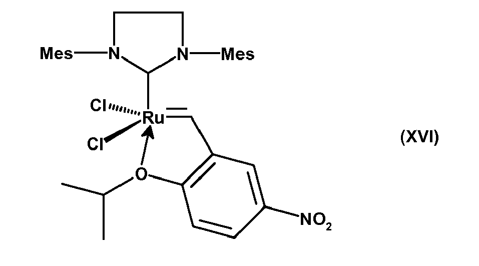

Der Katalysator (XVI) wird in der Literatur auch als "Grela-Katalysator" bezeichnet.

Ein weiterer geeigneter Katalysator, der unter die allgemeine Formel (B2) fällt, besitzt folgende Struktur (XVII), wobei Mes jeweils für 2,4,6-Trimethylphenyl steht.

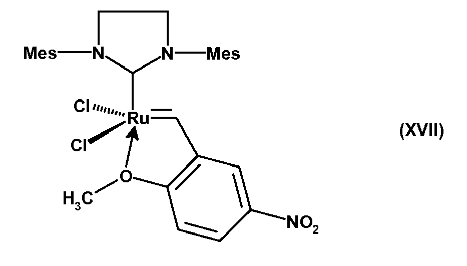

Alternative kann auch dendritisch aufgebauter **Katalysator der allgemeinen Formel (B3)** eingesetzt werden, 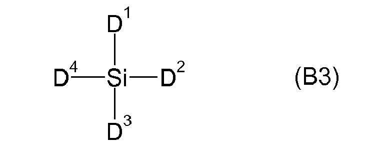 worin D¹, D², D³ und D⁴ jeweils eine Struktur der nachfolgend dargestellten allgemeinen Formel (XVIII) aufweisen, die über die rechts dargestellte Methylengruppe an das Silicium der Formel (B3) angebunden ist und 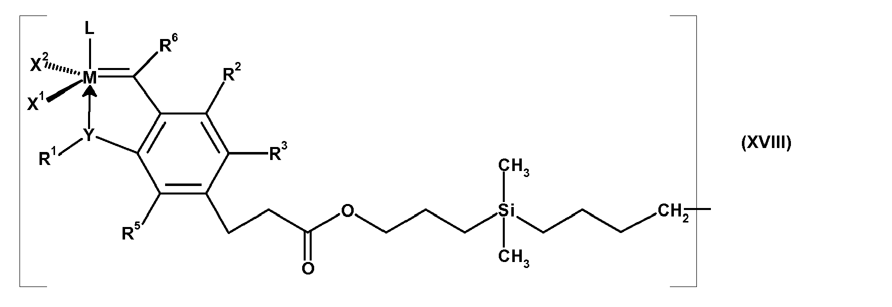
- M, L, X¹, X², R¹, R², R³, R⁵ und R⁶: die für die allgemeine Formel (B) genannten allgemeinen und bevorzugten Bedeutungen besitzen können.

Die Katalysatoren gemäß der allgemeinen Formel (B3) sind aus US 2002/0107138 A1 bekannt und gemäß den dort gemachten Angaben herstellbar.

Eine weitere alternative Ausführungsform betrifft einen Katalysator der Formel (B4), 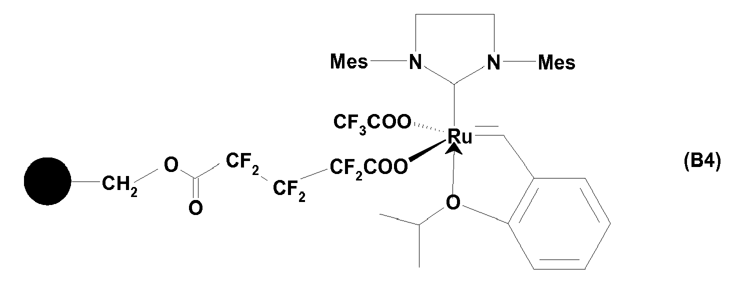 worin das Symbol • für einen Träger steht.

Bevorzugt handelt es sich bei dem Träger um ein Poly(styroldivinylbenzol)-Copolymer (PS-DVB). Die Katalysatoren gemäß Formel (B4) sind aus Chem. Eur. J. 2004 10, 777-784 prinzipiell bekannt und nach dort beschriebenen Herstellmethoden erhältlich.

Alle vorgenannten Katalysatoren des Typs (B) können entweder als solche zu der Mischung des teilhydrierten Nitrilkautschuks und des vinylgruppenhaltigen Silikonkautschuks zugesetzt werden oder aber auch auf einem festen Träger aufgebracht und immobilisiert werden. Als feste Phasen bzw. Träger sind solche Materialien geeignet, die einerseits inert gegenüber dem Reaktionsgemisch der Metathese sind und zum anderen die Aktivität des Katalysators nicht beeinträchtigen. Einsetzbar sind zur Immobilisierung des Katalysators beispielsweise Metalle, Glas, Polymere, Keramik, organische Polymerkügelchen oder auch anorganische Sol-Gele, Ruß, Kieselsäure, Silikate, Calciumcarbonat und Bariumsulfat.

Eine weitere Ausführungsform betrifft einen **Katalysator der allgemeinen Formel (C),** 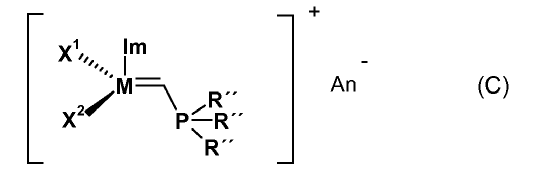 wobei
- M: Ruthenium oder Osmium bedeutet,
- X¹ und X²: gleich oder verschieden sind und anionische Liganden darstellen,
- R": gleich oder verschieden sind und organische Reste darstellen,
- Im: einen gegebenenfalls substituierten Imidazolidinrest darstellt und
- An: ein Anion darstellt.

Die Katalysatoren der allgemeinen Formel (C) sind prinzipiell bekannt (siehe z.B. Angew. Chem. Int. Ed. 2004,43, 6161-6165).

X¹ und X² können in der allgemeinen Formel (C) die gleichen allgemeinen, bevorzugten und besonders bevorzugten Bedeutungen besitzen wie in den Formeln (A) und (B).

Der Imidazolidinrest (Im) weist üblicherweise eine Struktur der allgemeinen Formeln (IIa) oder (IIb) auf, die bereits für den Katalysator-Typ der Formeln (A) und (B) genannt wurden und kann auch alle dort als bevorzugt genannten Strukturen, insbesondere die der Formeln (IIIa)-(IIIf) aufweisen.

Die Reste R" sind in der allgemeinen Formel (C) gleich oder verschieden und bedeuten einen geradkettigen oder verzweigten C₁-C₃₀-Alkyl-, C₅-C₃₀-Cylcoalkyl- oder Aryl-Rest, wobei die C₁-C₃₀-Alkylreste gegebenenfalls durch ein oder mehrere Doppel- oder Dreifachbindungen oder auch ein oder mehrere Heteroatome, bevorzugt Sauerstoff oder Stickstoff, unterbrochen sein können.

**Aryl** umfasst einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

Bevorzugt sind die Reste R" in der allgemeinen Formel (C) gleich und bedeuten Phenyl, Cyclohexyl, Cyclopentyl, Isopropyl, o-Tolyl, o-Xylyl oder Mesityl.

Alternativ kann auch ein **Katalysator der allgemeinen Formel (D)** eingesetzt werden, worin 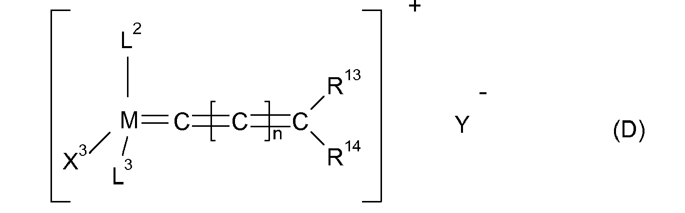
- M: Ruthenium oder Osmium bedeutet,
- R¹³, R¹⁴: unabhängig voneinander Wasserstoff, C₁-C₂₀-Alkyl, C₂-C₂₀-Alkenyl, C₂-C₂₀ Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylthio, C₁-C₂₀ -Alkylsulfonyl oder C₁-C₂₀ Alkylsulfinyl bedeuten,
- X³: ein anionischer Ligand ist,
- L²: ein neutraler n-gebundener Ligand ist, unabhängig davon, ob mono- oder polycyclisch,
- L³: einen Ligand aus der Gruppe der Phosphine, sulfonierten Phosphine, fluorierten Phosphine, funktionalisierten Phosphine mit bis zu drei Aminoalkyl-, Ammoniumalkyl-, Alkoxyalkyl-, Alkoxycarbonylalkyl-, Hydrocarbonylalkyl-, Hydroxyalkyl- oder Ketoalkyl-Gruppen, Phosphite, Phosphinite, Phosphonite, Phosphinamine, Arsine, Stibine, Ether, Amine, Amide, Imine, Sulfoxide, Thioether und Pyridine darstellt,
- Y⁻: ein nicht-koordinierendes Anion ist und
- n: 0, 1, 2, 3, 4 oder 5 ist.

In einer weiteren Ausführungsform wird ein **Katalysator der allgemeinen Formel (E)** eingesetzt, 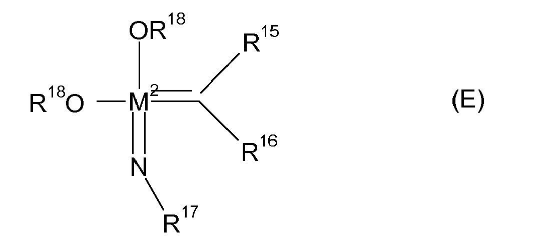 worin
- M²: Molybdän bedeutet,
- R¹⁵ und R¹⁶: gleich oder verschieden sind und Wasserstoff, C₁-C₂₀-Alkyl, C₂-C₂₀-Alkenyl, C₂-C₂₀-Alkinyl, C₆-C₂₄-Aryl, C₁-C₂₀-Carboxylat, C₁-C₂₀-Alkoxy, C₂-C₂₀-Alkenyloxy, C₂-C₂₀-Alkinyloxy, C₆-C₂₄-Aryloxy, C₂-C₂₀-Alkoxycarbonyl, C₁-C₂₀-Alkylthio, C₁-C₂₀ -Alkylsulfonyl oder C₁-C₂₀ Alkylsulfinyl bedeuten,
- R¹⁷ and R¹⁸: gleich oder verschieden sind und einen substituierten oder einen halogen-substituierten C₁-C₂₀-Alkyl, C₆-C₂₄-Aryl, C₆-C₃₀-Aralkyl-Rest oder Silikon-enthaltende Analoga davon darstellen.

Alternativ kann auch ein **Katalysator der allgemeinen Formel (F)** eingesetzt werden, 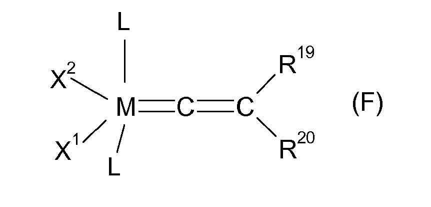 worin
- M: Ruthenium oder Osmium bedeutet,
- X¹ und X²: gleich oder verschieden sind und anionische Liganden darstellen, die alle in den allgemeinen Formeln (A) und (B) genannte Bedeutungen von X¹ und X² annehmen können,
- L: gleiche oder verschiedene Liganden darstellt, die alle in den allgemeinen Formeln (A) und (B) genannten Bedeutungen von L annehmen können,
- R¹⁹ and R²⁰: gleich oder verschieden sind und Wasserstoff oder substituiertes oder unsubstituiertes Alkyl bedeuten.

Alternativ kann auch ein **Katalysator der allgemeinen Formel (G), (H) oder (K)** eingesetzt werden, 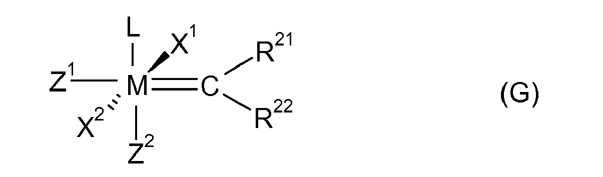 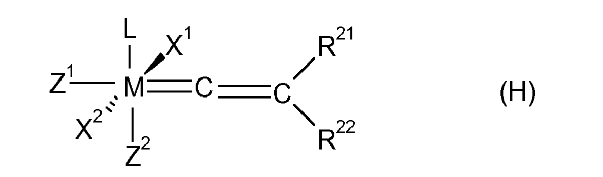 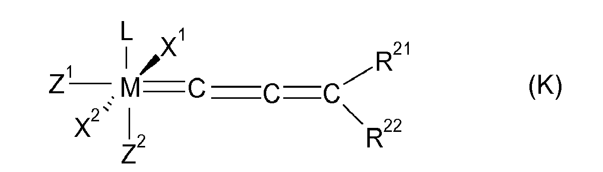 wobei
- M: Osmium oder Ruthenium bedeutet,
- X¹ und X²: gleich oder verschieden sind und zwei Liganden, bevorzugt anionische Liganden, darstellen,
- L: einen Liganden, bevorzugt einen neutralen Elektronen-Donor darstellt,
- Z¹ und Z²: gleich oder verschieden sind und neutrale Elektronen-Donoren darstellen,
- R²¹ und R²²: unabhängig voneinander Wasserstoff, Alkyl, Cycloalkyl, Alkenyl, Alkinyl, Aryl, Carboxylat, Alkoxy, Alkenyloxy, Alkinyloxy, Aryloxy, Alkoxycarbonyl, Alkylamino, Alkylthio, Alkylsulfonyl oder Alkylsulfinyl bedeuten, die jeweils durch ein oder mehrere Reste ausgewählt aus Alkyl, Halogen, Alkoxy, Aryl oder Heteroaryl substituiert sind.

Die Katalysatoren der allgemeinen Formeln (G), (H) und (K) sind prinzipiell bekannt, so z.B. aus WO 2003/011455 A1, WO 2003/087167 A2, Organometallics 2001, 20, 5314 und Angew. Chem. Int. Ed. 2002, 41, 4038. Die Katalysatoren sind kommerziell verfügbar oder aber nach den in den vorgenannten Literaturstellen angegebenen Herstellungsmethoden synthetisierbar.

In den erfindungsgemäß einsetzbaren Katalysatoren der allgemeinen Formeln (G), (H) und (K) eingesetzt sind **Z¹ und Z²** gleich oder verschieden und stellen neutrale Elektronen-Donoren dar. Diese Liganden sind üblicherweise schwach koordinierend. Typischerweise handelt es sich um optional substituierte heterocyclische Gruppen. Hierbei kann es sich um fünf oder sechsgliedrige monocyclische Gruppen mit 1 bis 4, bevorzugterweise 1 bis 3 und besonders bevorzugt 1 oder 2 Heteroatomen handeln oder um zwei oder polycyclische Strukturen aus 2, 3, 4 oder 5 solcher fünf oder sechsgliedriger monocyclischer Gruppen, wobei alle jeweils vorgenannten Gruppen optional durch ein oder mehrere Alkyl, bevorzugt C₁-C₁₀-Alkyl, Cycloalkyl, bevorzugt C₃-C₈-Cycloalkyl, Alkoxy, bevorzugt C₁-C₁₀-Alkoxy, Halogen, bevorzugt Chlor oder Brom, Aryl, bevorzugt C₆-C₂₄-Aryl, oder Heteroaryl, bevorzugt C₅-C₂₃ Heteroaryl-Reste, die jeweils erneut durch ein oder mehrere Gruppen, bevorzugt ausgewählt aus der Gruppe bestehend aus Halogen, inbesondere Chlor oder Brom, C₁-C₅-Alkyl, C₁-C₅-Alkoxy und Phenyl substituiert sein können.

Beispiele für Z¹ und Z² umfassen Stickstoff enthaltende Heterocyclen wie Pyridine, Pyridazine, Bipyridine, Pyrimidine, Pyrazine, Pyrazolidine, Pyrrolidine, Piperazine, Indazole, Quinoline, Purine, Acridine, Bisimidazole, Picolylimine, Imidazolidine und Pyrrole.

Z¹ und Z² können auch miteinander verbrückt sein unter Ausbildung einer cyclischen Struktur. In diesem Fall handelt es sich bei Z¹ und Z² um einen einzigen zweizähnigen Liganden.

In den Katalysatoren der allgemeinen Formeln (G), (H) und (K) kann L die gleichen allgemeinen, bevorzugten und besonders bevorzugten Bedeutungen annehmen wie L in den allgemeinen Formeln (A) und (B).

In den Katalysatoren der allgemeinen Formeln (G), (H) und (K) sind **R²¹ und R²²** gleich oder verschieden und bedeuten Alkyl, bevorzugt C₁-C₃₀-Alkyl, besonders bevorzugt C₁-C₂₀-Alkyl, Cycloalkyl, bevorzugt C₃-C₂₀-Cycloalkyl, besonders bevorzugt C₃-C₈-Cycloalkyl, Alkenyl, bevorzugt C₂-C₂₀-Alkenyl, besonders bevorzugt C₂-C₁₆-Alkenyl, Alkinyl, bevorzugt C₂-C₂₀-Alkinyl, besonders bevorzugt C₂-C₁₆-Alkinyl, Aryl, bevorzugt C₆-C₂₄-Aryl, Carboxylat, bevorzugt C₁-C₂₀-Carboxylat, Alkoxy, bevorzugt C₁-C₂₀-Alkoxy, Alkenyloxy, bevorzugt C₂-C₂₀-Alkenyloxy, Alkinyloxy, bevorzugt C₂-C₂₀-Alkynyloxy, Aryloxy, bevorzugt C₆-C₂₄-Aryloxy, Alkoxycarbonyl, bevorzugt C₂-C₂₀-Alkoxycarbonyl, Alkylamino, bevorzugt C₁-C₃₀-Alkylamino, Alkylthio, bevorzugt C₁-C₃₀-Alkylthio, Arylthio, bevorzugt C₆-C₂₄-Arylthio, Alkylsulfonyl, bevorzugt C₁-C₂₀-Alkylsulphonyl, oder Alkylsulfinyl, bevorzugt C₁-C₂₀-Alkylsulphinyl, wobei die vorgenannten Substituenten durch einen oder mehrere Alkyl, Halogen, Alkoxy, Aryl oder Heteroaryl Reste substituiert sein können.

In den Katalysatoren der allgemeinen Formeln (G), (H) und (K) sind **X¹ und X²** gleich oder verschieden und können die gleichen allgemeinen, bevorzugten und besonders bevorzugten Bedeutungen haben wie zuvor für X¹ und X² in der allgemeinen Formel (A) angegeben.

Bevorzugt werden Katalysatoren der allgemeinen Formeln (G), (H) und (K) eingesetzt, wobei
- M: Ruthenium ist,
- X¹ und X²: beide Halogen, insbesondere Chlor darstellen,
- R¹ und R²: gleich oder verschieden sind und fünf- oder sechsgliedrige monocyclische Gruppen mit 1 bis 4, bevorzugterweise 1 bis 3 und besonders bevorzugt 1 oder 2 Heteroatomen darstellen oder zwei- oder polycyclische Strukturen aus 2, 3, 4 oder 5 solcher fünf- oder sechsgliedriger monocyclischer Gruppen, wobei alle jeweils vorgenannten Gruppen durch ein oder mehrere Alkyl, bevorzugt C₁-C₁₀-Alkyl, Cycloalkyl, bevorzugt C₃-C₈-Cycloalkyl, Alkoxy, bevorzugt C₁-C₁₀-Alkoxy, Halogen, bevorzugt Chlor oder Brom, Aryl, bevorzugt C₆-C₂₄-Aryl, oder Heteroaryl, bevorzugt C₅-C₂₃ Heteroaryl-Reste substituiert sein können,
- R²¹ und R²²: gleich oder verschieden sind und C₁-C₃₀-Alkyl C₃-C₂₀-Cycloalkyl, C₂-C₂₀-Alkenyl, C₂-C₂₀-Alkynyl, C₆-C₂₄-Aryl, C₁-C₂₀-Carboxylate, C₁-C₂₀-Alkoxy, C₂-C₂₀-Alkenyloxy, C₂-C₂₀-Alkynyloxy, C₆-C₂₄-Aryloxy, C₂-C₂₀-Alkoxycarbonyl, C₁-C₃₀-Alkylamino, C₁-C₃₀-Alkylthio, C₆-C₂₄-Arylthio, C₁-C₂₀-Alkylsulphonyl, C₁-C₂₀-Alkylsulphinyl darstellen, und
- L: eine Struktur der bereits zuvor beschriebenen allgemeinen Formeln (IIa) oder (IIb), inbesondere der Formeln (IIIa) bis (IIIf) besitzt.

Ein besonders bevorzugter Katalysator, der unter die allgemeine Formel (G) fällt, besitzt die Struktur (XIX), 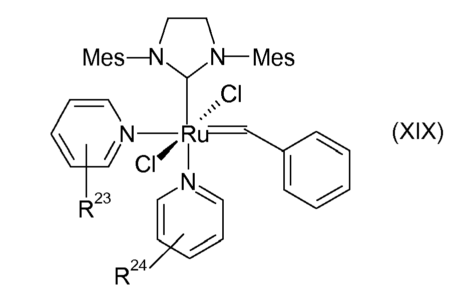 worin
- R²³ und R²⁴: gleich oder verschieden sind und Halogen, geradkettiges oder verzweigtes C₁-C₂₀-Alkyl, C₁-C₂₀-Heteroalkyl, C₁-C₁₀-Haloalkyl, C₁-C₁₀-Alkoxy, C₆-C₂₄-Aryl, bevorzugt Phenyl, Formyl, Nitro, Stickstoff-Heterocyclen, bevorzugt Pyridin, Piperidin und Pyrazin, Carboxy, Alkylcarbonyl, Halocarbonyl, Carbamoyl, Thiocarbomoyl, Carbamido, Thioformyl, Amino, Dialkylamino, Trialkylsilyl und Trialkoxysilyl bedeuten.

Die genannten Reste C₁-C₂₀-Alkyl, C₁-C₂₀-Heteroalkyl, C₁-C₁₀-Haloalkyl, C₁-C₁₀-Alkoxy, C₆-C₂₄-Aryl, bevorzugt Phenyl, Formyl, Nitro, Stickstoff-Heterocyclen, bevorzugt Pyridin, Piperidin und Pyrazin, Carboxy, Alkylcarbonyl, Halocarbonyl, Carbamoyl, Thiocarbomoyl, Carbamido, Thioformyl, Amino, Trialkylsilyl und Trialkoxysilyl können jeweils wieder durch ein oder mehrere Reste Halogen, bevorzugt Fluor, Chlor oder Brom, C₁-C₅-Alkyl, C₁-C₅-Alkoxy oder Phenyl substituiert sein.

Besonders bevorzugte Ausführungsformen des Katalysators der Formel (XIX) besitzen die Strukturen (XIX a) oder (XIX b), wobei R²³ und R²⁴ die gleichen Bedeutungen besitzen wie in der Formel (XIX) angegeben.

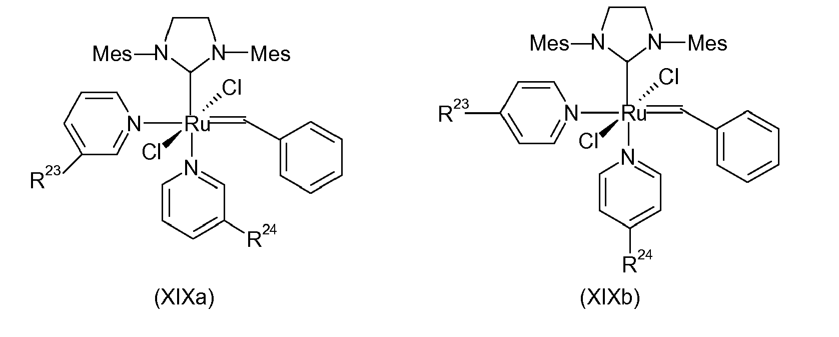

Wenn R²³ und R²⁴ für H stehen, wird in der Literatur vom "Grubbs III Katalysator" gesprochen.

Weitere geeignete Katalysatoren, die unter die allgemeinen Formeln (G), (H) und (K) fallen, besitzen die nachfolgend genannten Strukturformen (XX)-(XXXI), wobei Mes jeweils für 2,4,6-Trimethylphenyl steht.

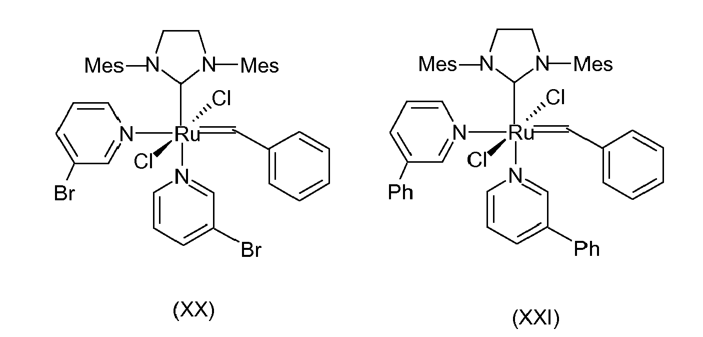

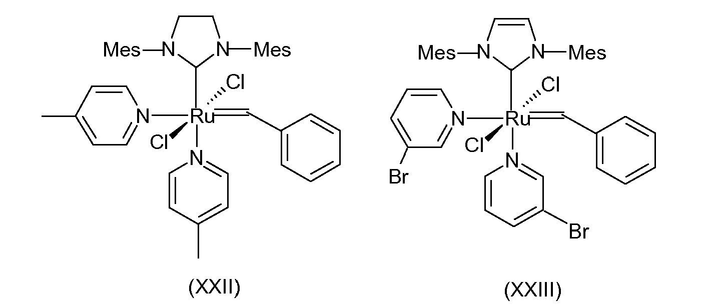

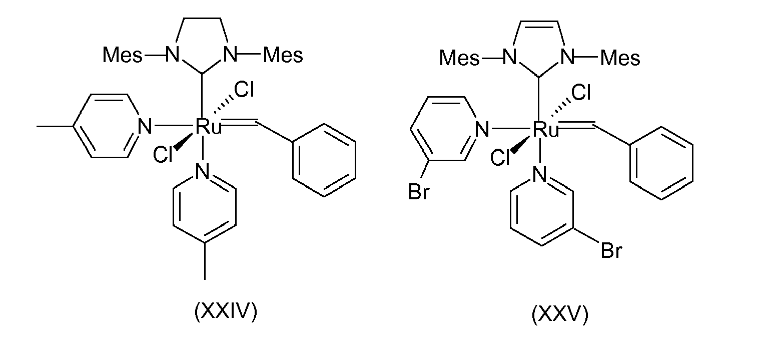

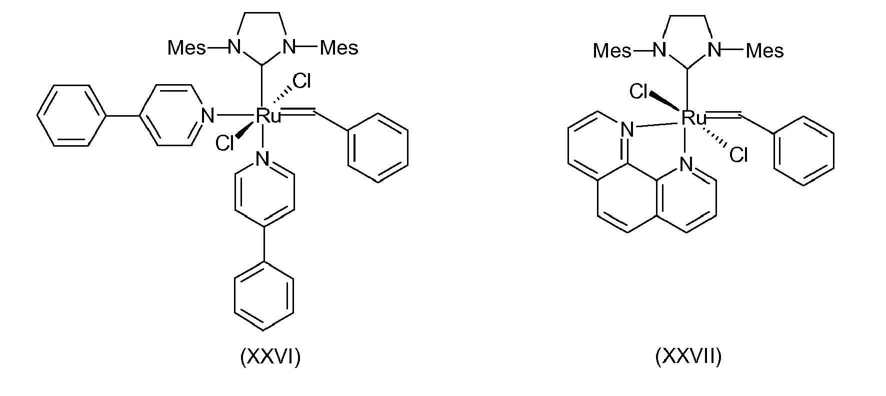

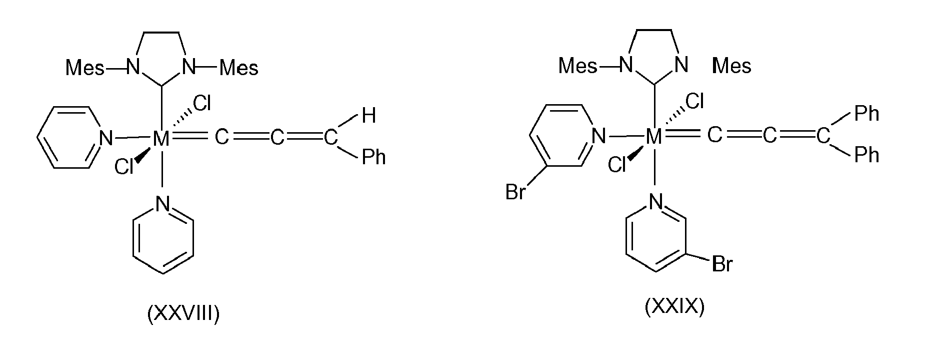

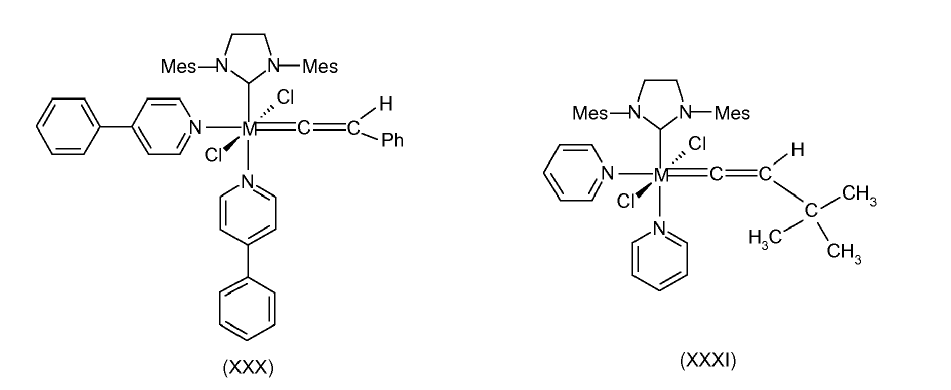

Alternativ kann auch ein **Katalysator (N)** eingesetzt werden, der das allgemeine Strukturelement (N1) aufweisen, wobei das mit einem "*" gekennzeichnete Kohlenstoff-Atom über eine oder mehrere Doppelbindungen an das Katalysator-Grundgerüst gebunden ist, 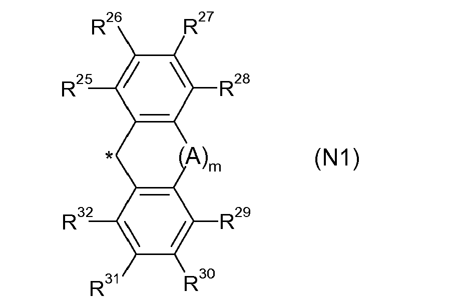 und worin
- R²⁵-R³²: gleich oder verschieden sind und für Wasserstoff, Halogen, Hydroxyl, Aldehyd, Keto, Thiol, CF₃, Nitro, Nitroso, Cyano, Thiocyano, Isocyanato, Carbodiimid, Carbamat, Thiocarbamat, Dithiocarbamat, Amino, Amido, Imino, Silyl, Sulfonat (-SO₃⁻), -OSO₃⁻,-PO₃⁻ oder OPO₃⁻ bedeuten oder für Alkyl-, Cycloalkyl-, Alkenyl-, Alkinyl-, Aryl-, Carboxylat-, Alkoxy-, Alkenyloxy-, Alkinyloxy-, Aryloxy-, Alkoxycarbonyl-, Alkylamino-, Alkylthio-, Arylthio-, Alkylsulfonyl-, Alkylsulfinyl, Dialkylamino-, Alkylsilyl oder Alkoxysilyl stehen, wobei diese Reste alle jeweils optional durch ein oder mehrere Alkyl-, Halogen-, Alkoxy-, Aryl- oder Heteroaryl-Reste substituiert sein können, oder alternativ jeweils zwei direkt benachbarte Reste aus der Gruppe von R²⁵-R³² unter Einschluss der Ringkohlenstoff-Atome, an die sie gebunden sind, durch Verbrückung eine cyclische Gruppe, bevorzugt ein aromatisches System, ausbilden, oder alternativ R⁸ gegebenenfalls mit einem anderen Liganden des Ruthenium- oder Osmium-Carben-Komplexkatalysators verbrückt ist,
- m: 0 oder 1 ist und
- A: Sauerstoff, Schwefel, C(R³³R³⁴), N-R³⁵, -C(R³⁶)=C(R³⁷)-, -C(R³⁶)(R³⁸)-C(R³⁶)(R³⁹)-bedeutet, worin R³³-R³⁹ gleich oder verschieden sind und jeweils die gleichen Bedeutungen besitzen können wie die Reste R²⁵-R³².

Die erfindungsgemäßen Katalysatoren weisen das Strukturelement der allgemeinen Formel (N1) auf, wobei das mit einem "*" gekennzeichnete Kohlenstoff-Atom über eine oder mehrere Doppelbindungen an das Katalysator-Grundgerüst gebunden ist. Sofern das mit einem "*" gekennzeichnete Kohlenstoff-Atom über zwei oder mehr Doppelbindungen an das Katalysator-Grundgerüst gebunden ist, können diese Doppelbindungen kumuliert oder konjugiert sein.

Derartige Katalysatoren (N) sind bereits in der EP-A-2 027 920 beschrieben, auf die hiermit für die Definition der Katalysatoren (N) und deren Herstellung Bezug genommen wird ("incorporated by reference"), soweit die entsprechenden Jurisdiktionen dies zulassen.

Zu den Katalysatoren (N) mit einem Strukturelement der allgemeinen Formel (N1) zählen beispielsweise solche der nachfolgenden **allgemeinen Formeln (N2a) und (N2b),** 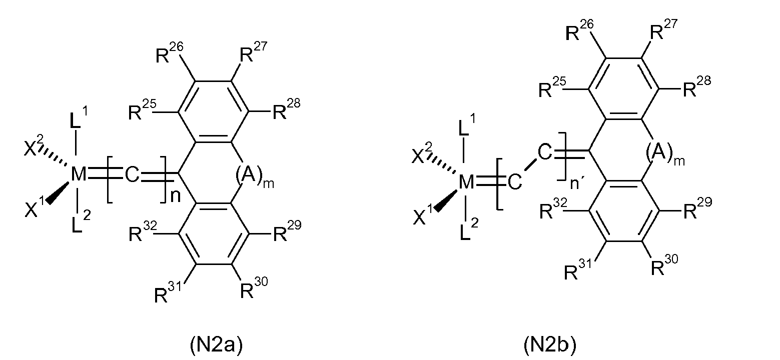 worin
- M: Ruthenium oder Osmium ist,
- X¹ und X²: gleich oder verschieden sind und zwei Liganden, bevorzugt anionische Liganden, darstellen,

- L¹ und L²: gleiche oder verschiedene Liganden, bevorzugt neutrale Elektronen-Donoren darstellen, wobei L² alternativ auch mit dem Rest R⁸ verbrückt sein kann,
- n: 0, 1, 2 oder 3, bevorzugt 0, 1 oder 2, ist,
- n': 1 oder 2, bevorzugt 1 ist, und
- R²⁵-R³², m und A: die gleichen Bedeutungen besitzen wie in der allgemeinen Formel (N1).

Bei den Katalysatoren der allgemeinen Formel (N2a) ist das Strukturelement der allgemeinen Formel (N1) über eine Doppelbindung (n = 0) oder über 2, 3 oder 4 kumulierte Doppelbindungen (bei n = 1, 2 oder 3) an das Zentralmetall des Komplexkatalysators gebunden. Bei den erfindungsgemäßen Katalysatoren der allgemeinen Formel (N2b) ist das Strukturelement der allgemeinen Formel (N1) über konjugierte Doppelbindungen an das Metall des Komplexkatalysators gebunden. In beiden Fällen befindet sich an dem mit einem "*" gekennzeichneten C-Atom eine Doppelbindung in Richtung Zentralmetall des Komplexkatalysators.

Die Katalysatoren der allgemeinen Formel (N2a) und (N2b) umfassen somit Katalysatoren, bei denen die folgenden **allgemeinen Strukturelemente (N3)-(N9)** 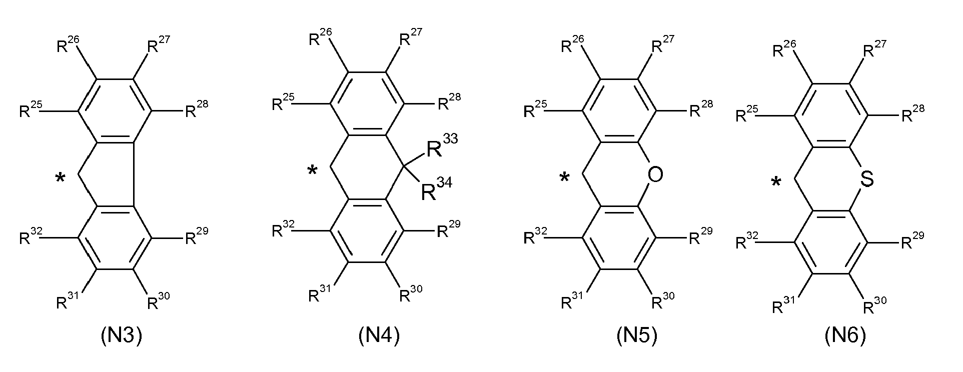 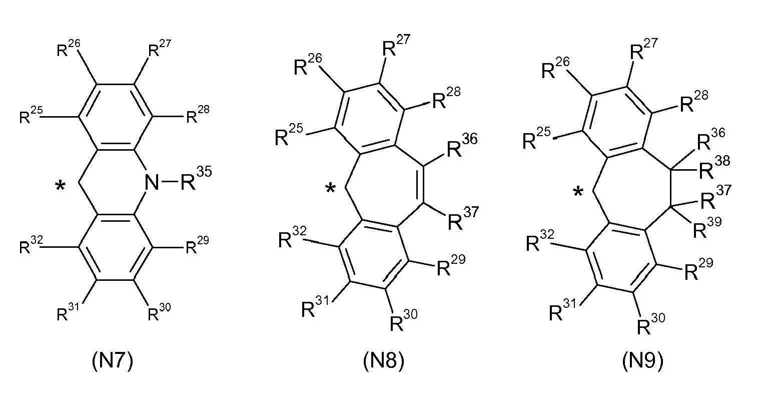 über das mit einem "*" gekennzeichnete C-Atom über ein oder mehrere Doppelbindungen an das Katalysator-Grundgerüst der **allgemeinen Formel (N10a) bzw. (N10b)** 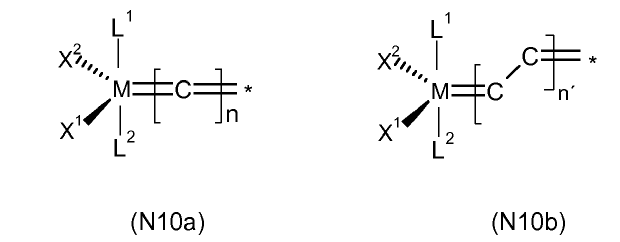 gebunden sind, wobei X¹ und X², L¹ und L², n, n' und R²⁵-R³⁹ die für die allgemeine Formeln (N2a) und (N2b) genannten Bedeutungen besitzen.

Typischerweise sind die erfindungsgemäßen Ruthenium- oder Osmium Carben-Katalysatoren fünffach koordiniert.
- Im **Strukturelement der allgemeinen Formel (N1)**:
- sind R¹⁵-R³²: gleich oder verschieden und bedeuten Wasserstoff, Halogen, Hydroxyl, Aldehyd, Keto, Thiol, CF₃, Nitro, Nitroso, Cyano, Thiocyano, Isocyanato, Carbodiimid, Carbamat, Thiocarbamat, Dithiocarbamat, Amino, Amido, Imino, Silyl, Sulfonat (-SO₃⁻), -OSO₃⁻, -PO₃⁻ oder OPO₃⁻ oder stehen für Alkyl, bevorzugt C₁-C₂₀-Alkyl, insbesondere C₁-C₆-Alkyl, Cycloalkyl, bevorzugt C₃-C₂₀-Cycloalkyl, insbesondere C₃-C₈-Cycloalkyl, Alkenyl, bevorzugt C₂-C₂₀-Alkenyl, Alkinyl, bevorzugt C₂-C₂₀-Alkinyl, Aryl, bevorzugt C₆-C₂₄-Aryl, inbesondere Phenyl, Carboxylat, bevorzugt C₁-C₂₀-Carboxylat, Alkoxy, bevorzugt C₁-C₂₀-Alkoxy, Alkenyloxy, bevorzugt C₂-C₂₀-Alkenyloxy, Alkinyloxy, bevorzugt C₂-C₂₀-Alkinyloxy, Aryloxy, bevorzugt C₆-C₂₄-Aryloxy, Alkoxycarbonyl, bevorzugt C₂-C₂₀-Alkoxycarbonyl, Alkylamino, bevorzugt C₁-C₃₀-Alkylamino, Alkylthio, bevorzugt C₁-C₃₀-Alkylthio, Arylthio, bevorzugt C₆-C₂₄-Arylthio, Alkylsulfonyl, bevorzugt C₁-C₂₀-Alkylsulfonyl, Alkylsulfinyl, bevorzugt C₁-C₂₀-Alkylsulfinyl, Dialkylamino-, bevorzugt Di(C₁-C₂₀-alkyl)amino, Alkylsilyl, bevorzugt C₁-C₂₀-Alkylsilyl, oder Alkoxysilyl, bevorzugt C₁-C₂₀-Alkoxysilyl-Reste darstellen, wobei diese Reste alle jeweils optional durch ein oder mehrere Alkyl-, Halogen-, Alkoxy-, Aryl- oder Heteroaryl-Reste substituiert sein können, oder alternativ auch jeweils zwei direkt benachbarte Reste aus der Gruppe von R²⁵-R³² unter Einschluss der Ringkohlenstoff-Atome, an die sie gebunden sind, durch Verbrückung eine cyclische Gruppe, bevorzugt ein aromatisches System, ausbilden können, oder alternativ R⁸ gegebenenfalls mit einem anderen Liganden des Ruthenium- oder Osmium-Carben-Komplexkatalysators verbrückt ist,
- m ist: 0 oder 1 und
- A: bedeutet Sauerstoff, Schwefel, C(R³³)(R³⁴), N-R³⁵, -C(R³⁶)=C(R³⁷)- oder C(R³⁶)(R³⁸)-C(R³⁷)(R³⁹)-, worin R³³-R³⁹ gleich oder verschieden sind und jeweils die gleichen bevorzugten Bedeutungen besitzen können wie die Reste R¹-R⁸.

**C₁-C₆-Alkyl** steht im **Strukturelement der allgemeinen Formel (N1)** beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl und n-Hexyl.

**C₃-C₈-Cycloalkyl** steht im **Strukturelement der allgemeinen Formel (N1)** beispielsweise für Cyclopropyl, Cyclobutyl, Cylopentyl, Cyclohexyl, Cycloheptyl und Cyclooctyl.

**C₆-C₂₄-Aryl** umfasst im **Strukturelement der allgemeinen Formel (N1)** einen aromatischen Rest mit 6 bis 24 Gerüstkohlenstoffatomen. Als bevorzugte mono-, bi- oder tricyclische carbocyclische aromatische Reste mit 6 bis 10 Gerüstkohlenstoffatomen seien beispielsweise Phenyl, Biphenyl, Naphthyl, Phenanthrenyl oder Anthracenyl genannt.

Die Reste X¹ und X² im Strukturelement der allgemeinen Formel **(N1)** besitzen die gleichen allgemeinen, bevorzugten und besonders bevorzugten Bedeutungen, die für Katalysatoren der allgemeinen Formel A genannt werden.

In den allgemeinen Formeln (N2a) und (N2b) bzw. analog in den allgemeinen Formeln (N10a) und (N10b) stehen die Reste L¹ und L² für gleiche oder verschiedene Liganden, bevorzugt neutrale Elektronen-Donoren und können die gleichen allgemeinen, bevorzugten und besonders bevorzugten Bedeutungen besitzen, die für die Katalysatoren der allgemeinen Formel A genannt sind.

Bevorzugt sind Katalysatoren der allgemeinen Formeln (N2a) oder (N2b) mit einer allgemeinen Struktureinheit (N1), wobei
- M: Ruthenium darstellt,
- X¹ und X²: gleichzeitig Halogen bedeuten,
- n: 0,1 oder 2 ist in der allgemeinen Formel (N2a) bzw.
- n': 1 ist in der allgemeinen Formel (N2b)
- L¹ und L²: gleich oder verschieden sind und die für die allgemeinen Formeln (N2a) und (N2b) genannten allgemeinen oder bevorzugten Bedeutungen besitzen,
- R²⁵-R³²: gleich oder verschieden sind und die für die allgemeinen Formeln (N2a) und (N2b) genannten allgemeinen oder bevorzugten Bedeutungen besitzen,
- m: entweder 0 oder 1 ist,
- und, wenn m = 1: ist
- A: für Sauerstoff, Schwefel, C(C₁-C₁₀-Alkyl)₂, -C(C₁-C₁₀-Alkyl)₂-C(C₁-C₁₀-Alkyl)₂-, -C(C₁-C₁₀-Alkyl)=C(C₁-C₁₀-Alkyl)- oder -N(C₁-C₁₀-Alkyl) steht.

Ganz besonders bevorzugt sind Katalysatoren der Formeln (N2a) oder (N2b) mit einer allgemeinen Struktureinheit (N1), wobei
- M: Ruthenium darstellt,
- X¹ und X²: beide Chlor bedeuten,
- n: 0,1 oder 2 ist in der allgemeinen Formel (N2a)bzw.
- n': 1 ist in der allgemeinen Formel (N2b)
- L¹: einen Imidazolidin-Rest der Formeln (IIIa) bis (IIIf) darstellt,
- L²: einen sulfonierten Phosphin-, Phosphat-, Phosphinit-, Phosphonit-, Arsin-, Stibin-, Ether-, Amin-, Amid-, Sulfoxid-, Carboxyl-, Nitrosyl-, Pyridin-Rest, einen Imidazolidin-Rest der Formeln (XIIa) bis (XIIf) oder einen Phosphin-Liganden, insbesondere PPh₃, P(p-Tol)₃, P(o-Tol)₃, PPh(CH₃)₂, P(CF₃)₃, P(p-FC₆H₄)₃, P(p-CF₃C₆H₄)₃, P(C₆H₄-SO₃Na)₃, P(CH₂C₆H₄-SO₃Na)₃, P(iso-Propyl)₃, P(CHCH₃(CH₂CH₃))₃, P(Cyclopentyl)₃, P(Cyclohexyl)₃, P(Neopentyl)₃ und P(Neophenyl)₃ darstellt,
- R²⁵-R³²: die für die allgemeinen Formeln (N2a) und (N2b) genannten allgemeinen oder bevorzugten Bedeutungen besitzen,
- m: entweder 0 oder 1 ist,
- und, wenn m = 1: ist
- A: für Sauerstoff, Schwefel, C(C₁-C₁₀-Alkyl)₂, -C(C₁-C₁₀-Alkyl)₂-C(C₁-C₁₀-Alkyl)₂-, -C(C₁-C₁₀-Alkyl)=C(C₁-C₁₀-Alkyl)- oder -N(C₁-C₁₀-Alkyl) steht.

Für den Fall, dass der Rest R²⁵ mit einem anderen Liganden des Katalysators der Formel N verbrückt ist, ergeben sich beispielsweise für die Katalysatoren der allgemeinen Formeln (N2a) und (N2b) die folgenden Strukturen der allgemeinen Formeln (N13a) und (N13b) 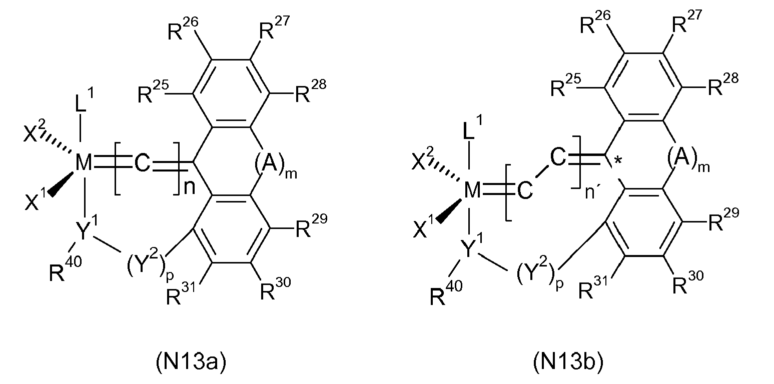 worin
- Y¹: Sauerstoff, Schwefel, einen Rest N-R⁴¹ oder einen Rest P-R⁴¹ bedeutet, wobei R⁴¹ die nachfolgend genannten Bedeutungen besitzt,
- R⁴⁰ und R⁴¹: gleich oder verschieden sind und einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkyl-sulfinyl-Rest darstellen, die alle jeweils optional durch ein oder mehrere Alkyl-, Halogen-, Alkoxy-, Aryl- oder Heteroaryl-Reste substituiert sein können,
- p: 0 oder 1 ist und
- Y²: wenn p = 1 ist, für -(CH₂)ᵣ- mit r = 1, 2 oder 3, -C(=O)-CH₂-, -C(=O)-, -N=CH-,-N(H)-C(=O)- oder aber alternativ die gesamte Struktureinheit "-Y¹ (R⁴⁰)- (Y²)ₚ-" für (-N(R⁴⁰)=CH-CH₂-), (-N(R⁴⁰,R⁴¹)=CH-CH₂-), steht und
wobei M, X¹, X², L¹, R²⁵-R³², A, m und n die gleichen Bedeutungen besitzen wie in den allgemeinen Formeln (IIa) und (IIb).

Als **Beispiele für Katalysatoren der Formel (N)** seien die folgenden Strukturen genannt:

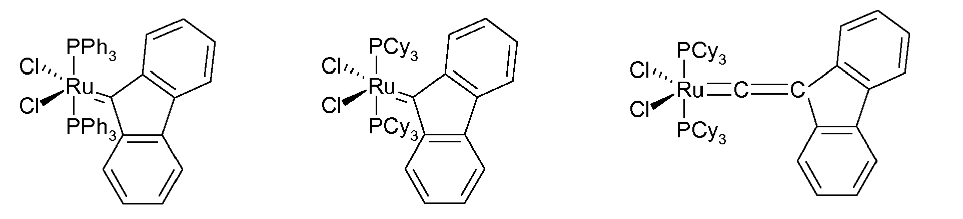

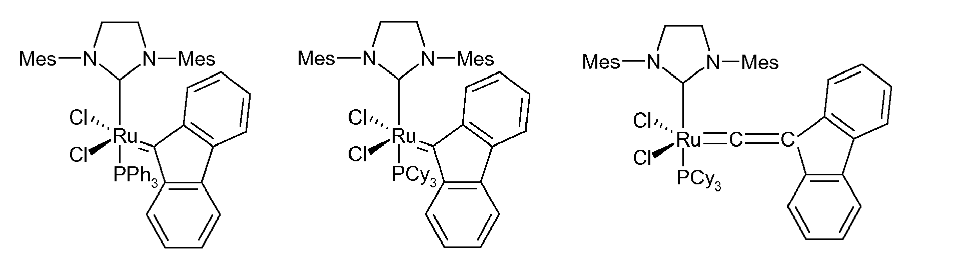

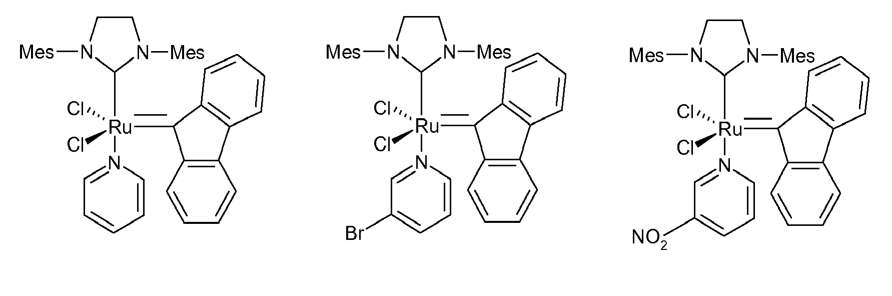

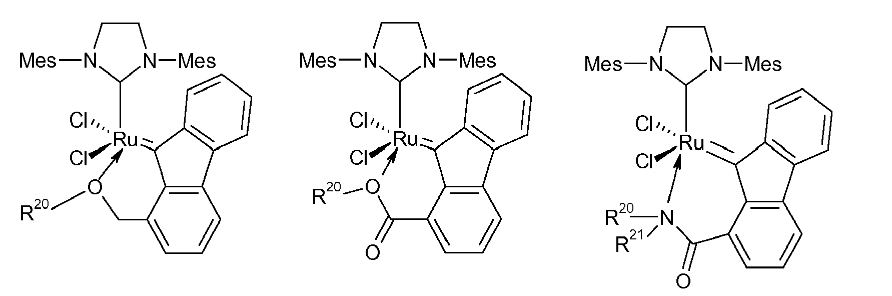

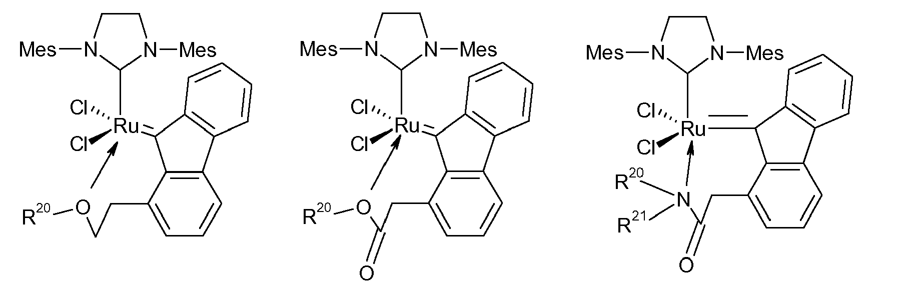

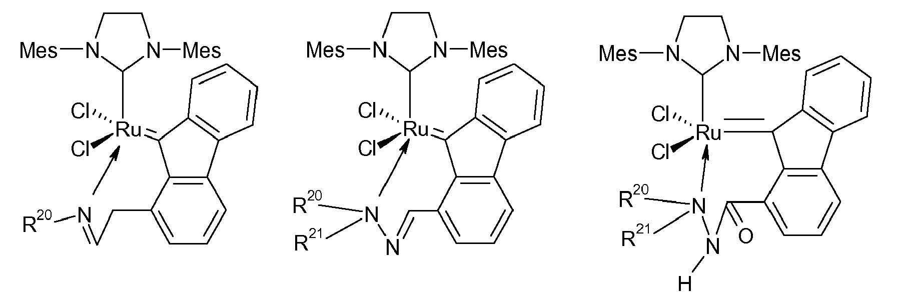

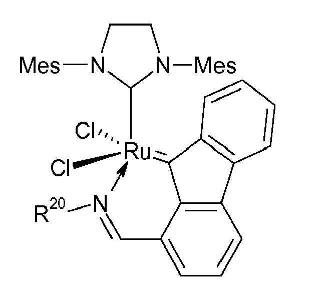

### Durchführung des erfindungsgemäßen Verfahrens:

Zur Herstellung der erfindungsgemäßen Blends wird mindestens ein teilhydrierter Nitrilkautschuk und mindestens ein vinylgruppenhaltiger Siliconkautschuk in Gegenwart eines Metathese-Katalysators gemischt, wobei es sich bei dem Metathese-Katalysator um einen Komplexkatalysator auf Basis eines Metalls der 6. oder 8. Nebengruppe des Periodensystems handelt, der mindestens einen carbenartig an das Metall gebundenen Liganden aufweist.

Bevorzugt erfolgt die Durchführung dieses Verfahrens im wesentlichen lösungsmittelfrei, d.h. beim Mischen wird im wesentlichen kein Lösungsmittel zugesetzt. Diese Form der Durchführung wird in der Fachwelt üblicherweise auch Durchführung "in Substanz" bezeichnet.

Die Menge des Komplexkatalysators bezogen auf die Summe des eingesetzten teilhydrierten Nitrilkautschuks und vinylgruppenhaltigen Silikonkautschuks hängt von der Natur sowie katalytischen Aktivität des speziellen Komplexkatalysators ab. Die Menge an eingesetztem Komplexkatalysator beträgt üblicherweise 1 bis 1.000 ppm Edelmetall, bevorzugt 2 bis 500 ppm, insbesondere 5 bis 250 ppm, bezogen auf die gesamte Menge an Kautschuk, d.h. die Summe aus eingesetztem teilhydriertem Nitrilkautschuk und vinylgruppenhaltigem Silikonkautschuk.

Der teilhydrierte Nitrilkautschuk und der vinylgruppenhaltigen Silikonkautschuk können in einem Gewichtsverhältnis von 5:95 bis 95:5, bevorzugt von 10:90 bis 90:10 eingesetzt werden. Bevorzugt werden 10 bis 45 Gew.Teile teilhydrierter Nitrilkautschuk und 55 bis 90 Gew.Teile des vinylgruppenhaltigen Silikonkautschuks eingesetzt. Gleichermaßen bevorzugt werden 55 bis 90 Gew.Teile teilhydrierter Nitrilkautschuk und 10-45 Gew.Teile des vinylgruppenhaltigen Silikonkautschuks eingesetzt. Besonders bevorzugt werden 10-30 Gew.Teile des teilhydrierten Nitrilkautschuks und 70 bis 90 Gew.Teile des vinylgruppenhaltigen Silikonkautschuks eingesetzt. Gleichermaßen besonders bevorzugt werden 70 bis 90 Gew.Teile teilhydrierten Nitrilkautschuks und 10-30 Gew.Teile des vinylgruppenhaltigen Silikonkautschuks eingesetzt.

Zur Umsetzung des mindestens einen teilhydrierten Nitrilkautschuks und mindestens einen vinylgruppenhaltigen Silikonkautschuk in Gegenwart eines Metathese-Katalysators werden die drei Komponenten gemischt, dies kann unter Einsatz von Mischaggregaten diskontinuierlich oder auch kontinuierlich erfolgen. Derartige Mischaggregate sind bekannt. Für eine diskontinuierliche Mischweise sind beispielweise ein Brabender-Mischer oder ein Walzenstuhl geeignet. Für eine kontinuierliche Mischungsherstellung eignen sich insbesondere Zweiwellenschnecken. Bei der diskontinuierlichen Mischungsherstellung hat es sich bewährt, den teilhydrierten Nitrilkautschuk im Mischer vorzulegen, diesen einige Zeit, beispielsweise 0,5 bis 5 Minuten bei einer Temperatur von 10 bis 80°C, bevorzugt 20 bis 50°C zu kneten und anschließend den vinylgruppenhaltigen Silikonkautschuk und den Metathese-Katalysator zuzugeben und das resultierende Gemisch bei 20 bis 120°C, bevorzugt 20 bis 100°C zu mischen. Es ist möglich, die Herstellung des Kautschukblends in einer einzigen Mischstufe durchzuführen, möglich ist es aber auch, mehrere Mischstufen hintereinander durchzuführen, wobei der Metathese-Katalysator in diesem Fall auch entsprechend anteilig auf die Mischstufen verteilt zugegeben wird. Die zuvor angegebenen Temperaturen können vom Fachmann jeweils durch geeignete Wahl der Rotorgeschwindigkeit, Stempeldruck und Mantelheizung (Innenmischer) oder durch Friktion bzw. Heizung oder Kühlung

(Walze) eingestellt werden. Es ist ferner möglich, die unvulkanisierten Kautschukblends zwischen den einzelnen Mischstufen zu lagern, beispielsweise bis zu 3 Tage.

Die Dauer des Mischvorgangs und somit die Metathese-Reaktion hängt von einer Reihe von Faktoren ab, z.B. vom Typ des teilhydrierten NBR, des vinylgruppenhaltigen Silikonkautschuks, dem Metathese-Katalysator, der Katalysator-Konzentration und der Reaktionstemperatur. Der Fortschritt der Metathese kann durch Standard-Analytik überwacht werden, z.B. durch GPC-Messungen oder durch Bestimmung der Viskosität. Alternativ ist auch der Einsatz bildgebender Verfahren wie z.B. die Anfertigung von REM Aufnahmen möglich.

**Gegenstand der Erfindung** sind ferner vulkanisierbare Mischungen enthaltend
(i) mindestens ein Kautschukblend erhältlich durch Mischen mindestens eines teilhydrierten Nitrilkautschuks und mindestens eines vinylgruppenhaltigen Silikonkautschuks in Gegenwart eines Metathese-Katalysators, bei dem es sich um einen Komplexkatalysator auf Basis eines Metalls der 6. oder 8. Nebengruppe des Periodensystems handelt, der mindestens einen carbenartig an das Metall gebundenen Liganden aufweist, und
(ii) mindestens einem peroxidischen Vernetzungssystem.

Zusätzlich können die vulkanisierbaren Mischungen noch ein oder mehrere weitere übliche Additive enthalten.

Die Herstellung dieser vulkanisierbaren Mischungen erfolgt üblicherweise durch Mischen des zuvor bereits hergestellten Kautschukblends (i) mit mindestens einem peroxidischen Vernetzungssystem (ii) und gegebenenfalls den weiteren Additiven.

Im peroxidischen Vernetzungssystem können als **peroxidische Vernetzer** beispielsweise Bis(2,4-dichlorbenzyl)peroxid, Dibenzoylperoxid, Bis(4-chlorbenzoyl)peroxid, 1,1-Bis-(t-butylperoxy)-3,3,5-trimethylcylohexan, tert-Butylperbenzoat, 2,2 Bis(t-butylperoxy) buten, 4,4-di-tert.Butyl peroxynonylvalerat, Dicumylperoxid, 2,5-Dimethyl-2,5-di(t-butylperoxy)-hexan, tert-Butylcumylperoxid, 1,3-Bis(t-butylperoxy isopropyl)-benzol, Di-t-butylperoxid und 2,5-Dimethyl-2,5-di(t-butylperoxy)-hexyn-3 eingesetzt werden.

Es kann vorteilhaft sein, im peroxidischen Vernetzungssystem neben den peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropan-tri(meth)acrylat, Triallyltrimellithat, Ethylenglycoldimethacrylat, Butandioldimethacrylat, Trimetylolpropan-trimethacrylat, Zn-diacrylat, Zn-dimethacrylat, 1,2-Polybutadien oder N,N'-m-phenylen-dimaleinimid geeignet.

Die Gesamtmenge des peroxidischen Vernetzungssystems liegt üblicherweise im Bereich von 0,1 bis 100 Gew.-Teile, bevorzugt im Bereich von 0,5 bis 75 Gew.-Teile und besonders bevorzugt im Bereich von 1 bis 50 Gew.-Teile, bezogen auf 100 Gew.-Teile der Summe aus teilhydriertem Nitrilkautschuk und vinylgruppenhaltigem Silikonkautschuk. Die Menge an peroxidischem Vernetzer, also aktiver Substanz, liegt dabei üblicherweise im Bereich von 0,5 bis 15 Gew.-Teilen, bevorzugt im Bereich von 1 bis 12,5 Gew.-Teilen und besonders bevorzugt im Bereich von 1,5 bis 10 Gew.-Teilen, bezogen auf 100 Gew.-Teilen der Summe aus teilhydriertem Nitrilkautschuk und vinylgruppenhaltigem Silikonkautschuk.

Neben der Zugabe des peroxidischen Vernetzungssystems kann die vulkanisierbare Mischung auch weitere übliche Kautschukadditive enthalten.

Diese schließen beispielsweise die typischen und dem Fachmann gut bekannten Substanzen wie Füllstoffe, Füllstoffaktivatoren, Anvulkanisationsverzögerer, Ozonschutzmittel, Alterungsschutzmittel, Antioxidationsmittel, Verarbeitungshilfsmittel, Extenderöle, Weichmacher, Verstärkungsmaterialien und Formtrennmittel ein.

Als **Füllstoffe** können beispielsweise Ruß, Kieselsäure, Bariumsulfat, Titandioxid, Zinkoxid, Calciumoxid, Calciumcarbonat, Magnesiumoxid, Aluminiumoxid, Eisenoxid, Aluminiumhydroxid, Magnesiumhydroxid, Aluminiumsilikate, Diatomeenerde, Talkum, Kaoline, Bentonite, Kohlenstoff Nanotubes, Teflon (letzteres bevorzugt in Pulverform), oder Silikate eingesetzt werden.

Als **Füllstoffaktivatoren** kommen insbesondere organische Silane, wie beispielsweise Vinyltrimethyloxysilan, Vinyldimethoxymethylsilan, Vinyltriethoxysilan, Vinyltris(2-methoxy-ethoxy)silan, N-Cyclohexyl-3-aminopropyltrimethoxysilan, 3-Aminopropyl-trimethoxysilan, Methyltrimethoxysilan, Methyltlriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan in Betracht. Weitere Füllstoffaktivatoren stellen zum Beispiel grenzflächenaktive Substanzen wie Triethanolamin und Ethylenglykole mit Molekulargewichten von 74 bis 10 000 g/mol dar. Die Menge an Füllstoffaktivatoren beträgt üblicherweise 0 bis 10 phr, bezogen auf die Menge des Füllstoffs. Die Bestimmung der geeigneten Menge an Füllstoffaktivator ist dem Fachmann in Abhängigkeit von der Art und Menge des Füllstoffs geläufig.

Daneben können auch **Anvulkanisationsverzögerer** eingesetzt werden. Hierzu gehören z.B.Verbindungen wie sie in WO-A-97/01597 und US-A-4,857,571 genannt sind. Bevorzugt sind sterisch gehinderte p-Dialkylaminophenole, insbesondere Ethanox 703 (Sartomer)

Als **Alterungsschutzmittel** können den vulkanisierbaren Mischungen beispielsweise die folgenden zugesetzt werden: Polymerisiertes 2,2,4-Trimethyl-1,2-dihydrochinolin (TMQ), 2-Mercaptobenzimidazol (MBI), Methyl-2-Mercaptobenzimidazol (MMBI) oder Zinkmethylmercaptobenzimidazol (ZMMBI).

Alternativ können auch die folgenden, allerdings weniger bevorzugten Alterungsschutzmittel eingesetzt werden: aminische Alterungsschutzmittel z. B. in Form von Mischungen aus Diaryl-p-phenylendiaminen (DTPD), octyliertem Diphenylamin (ODPA), Phenyl-α-Naphthylamin (PAN) und/oder Phenyl-β-Naphthylamin (PBN). Vorzugsweise werden solche auf Phenylendiaminbasis eingesetzt. Beispiele für Phenylendiamine sind N-Isopropyl-N'-phenyl-p-Phenylendiamin, N-1,3-Dimethylbutyl-N'-Phenyl-p-Phenylendiamin (6PPD), N-1,4-Dimethylpentyl-N'-phenyl-p-Phenylendiamin (7PPD) und N,N'-bis-1,4-(1,4-Dimethylpentyl)-p-Phenylendiamin (7PPD).

Die Alterungsschutzmittel werden üblicherweise in Mengen von bis zu 10 Gew.Teilen, bevorzugt bis zu 5 Gew.Teilen, besonders bevorzugt 0,25 bis 3 Gew.Teilen, inbesondere 0,4 bis 1,5 Gew. Teile, bezogen auf 100 Gew.Teile der Summe aus teilhydriertem Nitrilkautschuk und vinylgruppenhaltigem Silikonkautschuk eingesetzt.

Als **Formtrennmittel** kommen beispielsweise in Betracht: Gesättigte und teilweise ungesättigte Fett- und Ölsäuren und deren Derivate (Fettsäureester, Fettsäuresalze, Fettalkohole, Fettsäureamide), die vorzugsweise als Mischungsbestandteil Verwendung finden, weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen.

Die Formtrennmittel werden üblicherweise in Mengen von ca. 0 bis 10 Gew.Teilen, bevorzugt 0,5 bis 5 Gew.Teilen, bezogen auf 100 Gew.Teile der Summe aus teilhydriertem Nitrilkautschuk und vinylgruppenhaltigem Silikonkautschuk eingesetzt.

Auch die Verstärkung mit Festigkeitsträgern (Fasern) aus Glas, nach der Lehre von US-A-4,826,721 ist möglich sowie die Verstärkung durch Corde, Gewebe, Fasern aus aliphatischen und aromatischen Polyamiden (Nylon®, Aramid®), Polyestern und Naturfaserprodukten.

**Gegenstand der Erfindung** ist ferner ein Verfahren zur Herstellung von Vulkanisaten auf Basis mindestens eines erfindungsgemäßen Kautschukblends, welches dadurch gekennzeichnet ist, dass man die zuvor beschriebene vulkanisierbare Mischung durch Erhöhung der Temperatur vernetzt, bevorzugt in einem Formgebungsverfahren, besonders bevorzugt unter Anwendung des Spritzgusses.

**Gegenstand der Erfindung** ist somit ebenso das Vulkanisat, bevorzugt als Formteil vorliegend, welches durch das vorgenannte Vulkanisationsverfahren erhältlich ist.

Durch dieses Vulkanisationsverfahren können eine Vielzahl von Formteilen hergestellt werden, so z.B. eine Dichtung, eine Kappe, einen Schlauch oder eine Membran. Insbesondere können O-Ringdichtungen, Flachdichtungen, Wellendichtringe, Dichtmanschetten, Dichtkappen, Staubschutzkappen, Steckerdichtungen, Thermoisolierschläuche, Ölkühlerschläuche, Luftansaugschläuche, Servolenkschläuche oder Pumpenmembranen hergestellt werden.

### Beispiele:

In den nachfolgenden Beispielen wurden Blends unterschiedlicher Zusammensetzung auf Basis von teilhydriertem Nitrilkautschuk (Therban^{®} 3467), nachfolgend abgekürzt als "HNBR", und vinylgruppenhaltigem Silikonkautschuk (Silopren^{®} VR), nachfolgend abgekürzt als "VMQ", hergestellt. Die unvulkanisierten Kautschukblends wurden mittels Rasterelektronenmikroskopie und mittels Gelpermeationschromatographie untersucht. Die unvulkanisierten Kautschukblends wurden anschließend mit einem peroxidischen Vernetzer sowie verschiedenen Additiven vermischt und vulkanisiert. Die Vulkanisate wurden mit unterschiedlichen Methoden charakterisiert.

### (A) Herstellung unvulkanisierter Kautschukblends

Die Zusammensetzung der unvulkanisierten Kautschukblends ist in **Tabelle 1** zusammengefasst. Die nicht-erfindungsgemäßen Beispiele sind jeweils mit "VV" gekennzeichnet.

**Tabelle 1: Zusammensetzungen**

| **Beispiel** | | **1.1** | **1.2** | **1.3** | **1.4** | **1.5** | **1.6** | **1.7** | **1.8** |
|---|---|---|---|---|---|---|---|---|---|
| | | **VV** | **VV** | | **VV** | | **VV** | | **VV** |
| **Therban®3467¹⁾** | Gew.-Teile | 100 | 90 | 90 | 80 | 80 | 100 | 90 | 100 |
| **Siloprene® VR²⁾** | Gew.-Teile | - | 10 | 10 | 20 | 20 | - | 10 | - |
| **Katalysator** ³⁾: | | | | | | | | | |
| 1. Mischstufe | Gew.-Teile | - | - | 0,1 | - | 0,1 | - | 0,1 | - |
| 2. Mischstufe | Gew.-Teile | - | - | - | - | 0,1 | - | 0,1 | - |
| 3. Mischstufe | Gew.-Teile | - | - | - | - | 0,1 | - | 0,1 | - |

| | | | | | | | | | |
|---|---|---|---|---|---|---|---|---|---|
| 1) **Therban® 3467:** Teilhydrierter Nitrilkautschuk; Acrylnitrilgehalt: 34 Gew.%; Restdoppelbindungsgehalt: 5,5%; Mooney Viskosität [ML(1+4) at 100°C]: 68 ME (Handelsprodukt der Lanxess Deutschland GmbH) 2) **Siloprene® VR:** Polydimethylsilikonkautschuk mit 5 mol% Vinylgruppen (Handelsprodukt der Momentive Performance Materials), einem Zahlenmittel des Molekulargewichts Mn von 138.000 g/mol und einem Gewichtsmittel Mw von 304.000 g/mol eingesetzt werden. 3) **Katalysator:** (1,3-Bis-(2,4,6-trimethylphenyl)-2-imidazolidinyliden)dichloro(o-isopropoxyphenylmethylen) ruthenium (Grubbs-Hoveyda Katalysator von Sigma-Aldrich) | | | | | | | | | |

Bei der Herstellung der erfindungsgemäßen Blends 1.3, 1.5 und 1.7 wurde der "Grubbs-Hoveyda-Katalysator" der folgenden Formel eingesetzt. Die nicht erfindungsgemäßen Blends 1.2 VV, 1.4 VV, 1.6 VV und 1.8 VV wurden ohne Verwendung von Metathesekatalysator hergestellt. Bei der Herstellung des erfindungsgemäßen Beispiels 1.3 erfolgte die Zugabe des Metathesekatalysators in der 1. Mischstufe. Bei den erfindungsgemäßen Beispielen 1.5 und 1.7 erfolgte die Katalysatorzugabe in drei Mischstufen.

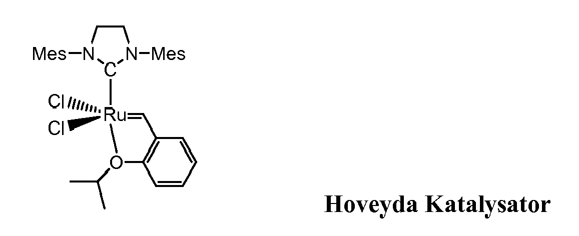

Die Herstellung der HNBR/VMQ-Blends der **Beispiele 1.2 -1.5 und 1.7** erfolgte in einem MIM Brabender mit einem Innenvolumen von 350 mL bei einem Füllgrad von 70% und einer Rotorgeschwindigkeit von 50 min⁻¹. Die Blendherstellung erfolgte, indem jeweils Therban® 3467 in den Brabender gegeben und bei einer Starttemperatur von 35°C 2 min. geknetet wurde. Danach wurde Siloprene® VR und bei den erfindungsgemäßen Beispielen außerdem Metathesekatalysator sukzessive innerhalb von 5 min in den Brabender gegeben. Danach wurden die Mischungen 60 min geknetet, wobei durch Einstellung der Rotorgeschwindigkeit und des Stempeldrucks die Innentemperatur bei 60°C gehalten wurde. Bei **Beispiel 1.3** erfolgte der Zusatz des Metathesekatalysators in der 1. Mischstufe. Bei den **Beispielen 1.5 und 1.7** wurde zusätzlich zur 1. Mischstufe noch eine 2. und eine 3. Mischstufe durchgeführt, wobei die Blends zwischen den Mischstufen jeweils 24 h bei Raumtemperatur gelagert wurden. Die Durchführung der 2. und 3. Mischstufe war identisch mit der 1. Mischstufe (jeweils 60 min. bei 60°C).

### Bestimmung der Phasenmorphologie durch Rasterelektronenmikroskopie:

Zur Beurteilung der Phasenmorphologie der unvulkanisierten HNBR/VMQ-Blends wurden rasterelektronenmikroskopische ("REM") Untersuchungen durchgeführt. Hierzu wurden unvulkanisierte HNBR/VMQ-Blends mit 10 Gew. % VMQ (Beispiele 1.2 VV und 1.7) und mit 20 Gew. % VMQ (Beispiele 1.4 VV und 1.5) ausgewählt. Für die REM-Untersuchungen wurden von den Blends mittels eines Skalpells ca. 1 mm starke Proben ohne Unebenheiten herauspräpariert.

Die REM-Untersuchungen wurden ohne vorhergehende Bedampfung mit einem Metallfilm durchgeführt. Zur Reduktion der elektrostatischen Aufladung der Proben während der REM-Untersuchungen wurde der "Charge-up Reduction Mode" gewählt. Als Mikroskop diente ein Tabletop-Mikroskop TM-1000 der Fa. Hitachi.

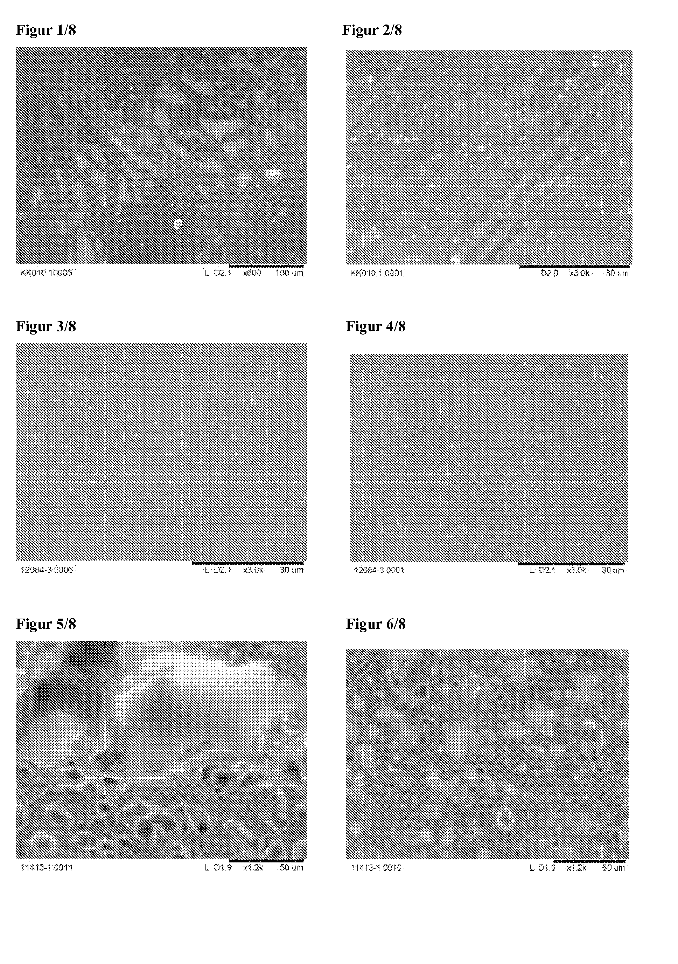

- **Figur 1 und Figur 2:**: REM Aufnahmen des Kautschukblends aus **Beispiel 1.2 VV** (Figur 1: 600 fache Vergrößerung, Figur 2: 3000fache Vergrößerung)
- **Figur 3 und Figur 4:**: REM Aufnahmen des Kautschukblends aus **Beispiel 1.7** (Figur 3: 3000 fache Vergrößerung, Figur 4: 3000fache Vergrößerung)
- **Figur 5 und Figur 6:**: REM Aufnahmen des Kautschukblends aus **Beispiel 1.4 VV** (Figur 5: 1200 fache Vergrößerung, Figur 6: 1200fache Vergrößerung)

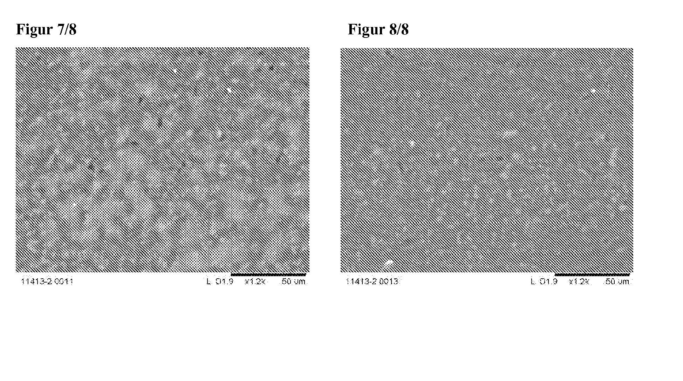

- **Figur 7 und Figur 8:**: REM Aufnahmen des Kautschukblends aus **Beispiel 1.5** (Figur 7: 1200 fache Vergrößerung, Figur 8: 1200facher Vergrößerung)

Bei den hellen Stellen in den REM-Aufnahmen handelt es sich um VMQ-Partikel, die in HNBR als kontinuierlicher Phase (erkennbar als dunkle Stellen) dispergiert sind.

Die Größe der VMQ-Partikel ist ein Maß für die Kompatibilität der Polymere. Je höher die Mischbarkeit der beiden Polymere ist, desto kleiner sind die separaten Phasen, da mit steigender Mischbarkeit die Grenzflächenspannung abnimmt. Der Vergleich der REM-Aufnahmen von HNBR/VMQ-Blends mit jeweils 10 Gew. % VMQ (Beispiel 1.2 VV und erfindungsgemäßes Beispiel 1.7) bzw. analog mit jeweils 20 Gew.% VMQ (Beispiel 1.4 VV und erfindungsgemäßes Beispiel 1.5) zeigt, dass durch den Einsatz des Metathesekatalysators die Größe der separaten VMQ Partikel deutlich reduziert wird. Dies ist ein indirekter Beweis für die Bildung von Pfropfcopolymeren aus den teilhydrierten Nitrilkautschuken.

### Molmassen:

Die Molmassen der unvulkanisierten HNBR/VMQ-Blends sowie der reinen Blendkomponenten HNBR und VMQ wurden mittels Gelpermeationschromatographie **(GPC)** bestimmt. Hierzu wurden jeweils ca. 15 mg der Probe in 3 mL Chloroform bei Raumtemperatur gelöst. Nach der Filtration mittels eines Spritzenfilters (Hersteller: Macherey-Nagel) wurden die Proben unter folgenden Bedingungen untersucht:

| | |
|---|---|
| Pumpe: | Model 510, Waters |
| Säule: | Vorsäule PLgel + Plgel 5 µm MIXED-C 300 x 7,5 mm + PLgel 5 µm MIXED-C 600 x 7,5 mm, Polymer Laboratories |
| RI-Detektor: | Model 410 Differential Refraktometer, Waters |
| Flussgeschwindigkeit: | 1,0 mL·min⁻¹ |
| Temperatur: | Raumtemperatur |
| Eluent: | Chloroform (7,5 mmol·L⁻¹ 3-Methyl-2-buten) |
| Kalibrierstandards: | Polystyrol, Polymer Standard Service Molmassen von 1.100 bis 2,06·10⁶ g/mol. |

Hierbei wurden die in **Tabelle 2** zusammengefassten Ergebnisse erhalten.

**Tabelle 2: Molmassen und Polydispersitätsindex (PDI) der unvulkanisierten HNBR/VMQ-Blends**

| **Beispiel** | **1.2** | **1.3** | **1.4** | **1.5** | **1.7** | **VMQ** | **HNBR** |
|---|---|---|---|---|---|---|---|
| | **VV** | | **VV** | | | | |
| **Mn [kg/mol]** | 78 | 2092 / 83 | 65 | 1702 / 43 | 1368 / 49 | 138 | 76 |
| **Mw [kg/mol]** | 224 | 2735 / 153 | 167 | 2256 / 81 | 1595/123 | 304 | 254 |
| **PDI** | 2,88 | 1,31 / 1,85 | 2,56 | 1,33 / 1,90 | 1,17 / 2,50 | 2,20 | 3,34 |

Mₙ steht für das Zahlenmittel, M_{w} für das Gewichtsmittel und PDI für den Polydispersitätsindex (PDI=M_{w}/Mₙ); Der PDI stellt ein Maß für die Breite der Molekulargewichtsverteilung dar.

Gefunden wurde, dass die erfindungsgemäß hergestellten HNBR/VMQ-Blends 1.3, 1.5 und 1.7 im Gegensatz zu den nicht erfindungsgemäßen Blends 1.2 und 1.4 eine bimodale Verteilung der Molmassen aufweisen, wobei der zusätzlich auftretende Peak der erfindungsgemäßen Blends eine hohe Molmasse aufweist. Dieser zusätzlich auftretende Peak ist jedoch gegenüber dem zweiten Peak bei niedrigerer Molmasse schwächer ausgeprägt Er wird in den Beispielen 1.3 und 1.5 isoliert und bei Beispiel 1.7 als "Schulter" detektiert. Der hochmolekulare Peak tritt in keiner der reinen Blendkomponenten HNBR und MVQ auf und wird als HNBR/VMQ-Pfropfcopolymer interpretiert.

### (B) Herstellung von unvulkanisierten Kautschukmischungen

Mit den in **Tabelle 1** beschriebenen Kautschuken bzw. Kautschukblends wurden auf einer Laborwalze (Walzendurchmesser: 150 mm; Walzenlänge: 250 mm der Firma Troester) bei einer Kühlwassertemperatur von 20°C vulkanisierbare Kautschukmischungen hergestellt, die anschließend vulkanisiert wurden. Die Kautschukmischungen hatten die in Tabelle 3 angegebenen Zusammensetzungen.

**Tabelle 3: Zusammensetzung der Kautschukmischungen**

| **Mischungsbestandteil** | **Menge** **[Gew.-Teile]** |
|---|---|
| Kautschuke bzw. Kautschukblends aus Tabelle 1 | 100 |
| Ruß ⁴⁾ | 50 |
| 4,4-Bis(1,1-dimethylbenzyl)-diphenylamin⁵⁾ | 1 |
| Zinksalz von Methyl-2-mercaptobenzimidazol⁶⁾ | 0,4 |
| Magnesiumoxid⁷⁾ | 2 |
| Trimellitsäureester von linearen C₈-C₁₀-Alkoholen⁸⁾ | 5 |
| Triallylisocyanurat⁹⁾ | 2,1 |
| Di-(tertbutylperoxyisopropyl) benzol (40%ig) ¹⁰⁾ | 7 |

| | |
|---|---|
| 4) Corax^{®} N550 (Handelsprodukt der Evonik - Degussa GmbH) 5) Luvomax^{®} CDPA (Handelsprodukt der Lehmann & Voss & Co.) 6) Vulkano^{®} ZMB2/C5 (Handelsprodukt der Lanxess Deutschland GmbH) 7) Maglite DE (Handelsprodukt der Merck & Co. Inc. USA) 8) Diplast^{®} TM 8-10/ST (Handelsprodukt der Lonza SpA) 9) TAIC - 70 (Handelsprodukt der Kettlitz Chemie GmbH & Co.) 10) Perkadox^{®} 14-40 (40%ig geträgert auf hellem Füllstoff) (Handelsprodukt der Akzo Nobel Chemicals GmbH) | |

Die Herstellung der Kautschukmischungen erfolgte in einem MIM Brabender mit 350 ml Innenvolumen bei einer Umdrehungsgeschwindigkeit von 50 min⁻¹und einer Starttemperatur von 35°C. Die Zugabe der verschiedenen Mischungsbestandteile erfolgte in der in Tabelle 3 angegebenen Reihenfolge.

### (C) Vulkanisationsverhalten der Kautschukmischungen

Das Vulkanisationsverhalten der Kautschukmischungen wurde bei 180°C in einem Monsanto-Disk-Rheometer (MDR) nach DIN 53 529, Teil 3 (1°, 1.7 Hz) bestimmt.

Nach DIN 53 529, Teil 3 bedeuten:
- Fₘᵢₙ:: Minimum des Drehmoments der Vernetzungsisotherme
- Fₘₐₓ:: Maximum des Drehmoments der Vernetzungsisotherme
- Fₘₐₓ - Fₘᵢₙ:: Differenz der Vulkameteranzeigen zwischen Maximum und Minimum
- t₁₀:: Zeit, bei der 10% von Fₘₐₓ - Fₘᵢₙ erreicht sind
- t₅₀:: Zeit, bei der 50% von Fₘₐₓ - Fₘᵢₙ erreicht sind
- t₉₀:: Zeit, bei der 90% von Fₘₐₓ - Fₘᵢₙ erreicht sind
- t₉₅:: Zeit, bei der 95% von Fₘₐₓ - Fₘᵢₙ erreicht sind

Charakteristische Kennzahlen zur Charakterisierung des Vulkanisationsverhaltens der Kautschukmischungen sind in **Tabelle 4** zusammengefasst.

**Tabelle 4: Vulkanisationsverhalten der Kautschukmischungen**

| **Biespel** | **1.1 VV** | **1.1 VV** | **1.3** | **1.4. VV** | **1.5** | **1.6 VV** | **1.7** | **1.8 VV** |
|---|---|---|---|---|---|---|---|---|
| Fₘᵢₙ [dNm] | 1,9 | 1,4 | 2,0 | 1,1 | 2,0 | 1,8 | 2,0 | 1,7 |
| Fₘₐₓ [dNm] | 28,5 | 31,7 | 32,0 | 31,2 | 31,4 | 26,9 | 27,8 | 27,2 |
| Fₘₐₓ-Fₘᵢₙ[dNm] | 26,6 | 30,3 | 30,0 | 30,1 | 29,3 | 25,1 | 25,8 | 25,4 |
| t₁₀ [sec] | 35 | 36 | 36 | 36 | 42 | 36 | 44 | 37 |
| t₅₀ [sec] | 108 | 113 | 111 | 113 | 125 | 111 | 131 | 115 |
| t₉₀ [sec] | 316 | 352 | 318 | 323 | 344 | 323 | 368 | 339 |
| t₉₅ [sec] | 409 | 470 | 410 | 416 | 442 | 417 | 479 | 438 |
| t₉₀-t₁₀ [sec] | 281 | 316 | 282 | 287 | 302 | 287 | 324 | 302 |

Die **erfindungsgemäßen Beispiele 1.3, 1.5 und 1.7** weisen im Vergleich zu den entsprechenden Vergleichsbeispielen gleich gute oder sogar deutlich längere Anvulkanisationszeiten (t₁₀) auf (Vergleich von 1.3 mit 1.1 VV und 1.2VV; Vergleich von 1.5 mit 1.4VV und 1.6VV sowie Vergleich von 1.7 mit 1.8VV). Dies ist ein Hinweis auf eine vergleichbare bzw. verbesserte Verarbeitungssicherheit der erfindungsgemäß hergestellten Kautschukmischungen.

### (D) Bestimmung der Eigenschaften der Kautschukvulkanisate

Zur Bestimmung der Vulkanisateigenschaften wurden aus den Kautschukmischungen Prüfkörper hergestellt, die 15 min bei 180°C in einer Presse bei 120 bar vulkanisiert wurden. An den Vulkanisaten wurden die in den **Tabellen 5-7** zusammengefassten Eigenschaften bestimmt.

### (D1) Bestimmung der mechanischen Eigenschaften

In **Tabelle 5** sind mechanische Eigenschaften zusammengestellt, die bei 23°C und 70°C nach folgenden Normen ermittelt wurden:

| | |
|---|---|
| DIN 53505: | Shore A-Härte bei 23°C und 70°C |
| DIN 53504: | Spannungswerte bei 10%, 25%, 50%, 100%, 200% und 300 % Dehnung (σ₁₀, σ₂₅, σ₅₀, σ₁₀₀, σ₂₀₀ und σ₃₀₀), Zugfestigkeit (TS) sowie Bruchdehnung (ε_{b}) bei 23°C und 70°C |

**Tabelle 5: Mechanische Eigenschaften der vulkanisierten Kautschukmischungen**

| **Beispiel** | | **1.1 VV** | **1.2 VV** | **1.3** | **1.4 VV** | **1.5** | **1.6 VV** | **1,7** | **1.8VV** |
|---|---|---|---|---|---|---|---|---|---|
| **23°C** | | | | | | | | | |
| **Shore A Härte** | | 70 | 72 | 72 | 73 | 75 | 70 | 72 | 69 |
| **σ₁₀** | [MPa] | 0,7 | 0,8 | 0,8 | 0,8 | 0,9 | 0,7 | 0,8 | 0,7 |
| **σ₂₅** | [MPa] | 1,3 | 1,5 | 1,5 | 1,6 | 1,8 | 1,4 | 1,5 | 1,3 |
| **σ₅₀** | [MPa] | 2,5 | 2,9 | 3,1 | 3,4 | 4,2 | 2,5 | 3,1 | 2,4 |
| **σ₁₀₀** | [MPa] | 7,1 | 9 | 9,3 | 10,7 | 11,8 | 7,3 | 8,9 | 7 |
| **ε_{b}** | [%] | 211 | 209 | 192 | 168 | 136 | 234 | 188 | 240 |
| **TS** | [MPa] | 21 | 22,6 | 20,4 | 17,6 | 16,7 | 23,7 | 20,2 | 25,6 |
| **70°C** | | | | | | | | | |
| **Shore A Härte** | | 69 | 70 | 71 | -- | -- | -- | 70 | 69 |
| **σ₁₀** | [MPa] | 0,6 | 0,7 | 0,7 | 0,7 | 0,7 | 0,6 | 0,7 | 0,6 |
| **σ₂₅** | [MPa] | 1,2 | 1,4 | 1,4 | 1,5 | 1,6 | 1,2 | 1,4 | 1,2 |
| **σ₅₀** | [MPa] | 2,2 | 2,7 | 2,9 | 3 | 3,6 | 2,3 | 2,7 | 2,2 |
| **σ₁₀₀** | [MPa] | 6,2 | 8 | 8,3 | 9,3 | -- | 6,5 | 7,6 | 6,1 |
| **ε_{b}** | [%] | 163 | 143 | 124 | 103 | 97 | 148 | 136 | 164 |
| **TS** | [MPa] | 13,7 | 13,3 | 11,4 | 9,7 | 9,6 | 12 | 11,6 | 14 |

Die **erfindungsgemäßen Beispiele 1.3, 1.5 und 1.7** weisen im Vergleich mit den nicht erfindungsgemäßen Beispielen sowohl bei 23°C als auch bei 70°C ein gleich gutes bzw. sogar höheres Niveau der Spannungswerte bei 50% und 100% Dehnung auf. Dies bedeutet, dass der Vernetzungsgrad der **erfindungsgemäßen Beispiele** gleich bzw. höher und damit die elastischen Eigenschaften verbessert sind.

### (D2) Bestimmung des Druckverformungsrests nach DIN ISO 815

Der **Druckverformungsrest** der Vulkanisate wurde nach **DIN ISO 815** bestimmt. Hierzu wurden die Vulkanisate (Prüfkörper A) um 25% komprimiert und im komprimierten Zustand bei unterschiedlichen Temperaturen (-30°C und 150°C) unterschiedliche Zeiten (70 h und 158 h) gelagert **(Tabelle 6).** Nach diesen Lagerzeiten wurden die Proben entlastet und die bleibende Verformung bei 23°C bestimmt. Wie in Tabelle 6 gezeigt, weisen die erfindungsgemäß hergestellten **Vulkanisate 1.3 und 1.7** sowohl nach Lagerung bei -30°C/70h als auch nach Lagerung bei 150°C/168h niedrigere (d. h. bessere) Werte für den Druckverformungsrest auf als die entsprechenden nicht erfindungsgemäßen Beispiele. Der niedrigere Druckverformungsrest nach Lagerung bei -30°C/70h bedeutet, dass die Tieftemperatureigenschaften des Vulkanisats verbessert sind. Der niedrigere Druckverformungsrest nach Lagerung bei 150°C/168h bedeutet, dass zudem die Alterungseigenschaften des Vulkanisats verbessert sind. Aufgrund der verbesserten Druckverformungsreste kann gesagt werden, dass die erfindungsgemäß hergestellten Vulkanisate **1.3 und 1.7** sowohl bei niedrigen als auch bei hohen Temperaturen verbesserte Eigenschaften aufweisen. Die reduzierten Druckverformungsreste sind ein Indiz dafür, dass Vulkanisate auf der Basis der erfindungsgemäß hergestellten Blends verbesserte Eigenschaften bei hohen und niedrigen Temperaturen aufweisen.

**Tabelle 6: Druckverformungsrest der vulkanisierten Kautschukmischungen**

| **Beispiel** | | **1.1** | **1.2** | **1.3** | **1.4** | **1.5** | **1.6** | **1.7** | **1.8** |
|---|---|---|---|---|---|---|---|---|---|
| | | **VV** | **VV** | | **VV** | | **VV** | | **VV** |
| -30°C/70h | % | 102 | 100 | 93 | - | - | - | 97 | 97 |
| 150°C/168h | % | 40 | 35 | 31 | - | - | - | 38 | 43 |

### (D3) Bestimmung der Temperatur Retraktion (TR)

Zur Charakterisierung der Elastizität bei niedrigen Temperaturen wurde die **Temperatur-Retraktion (TR)** nach ISO 2921 bestimmt. Hierfür wurden die Vulkanisate um 50% gedehnt und in einem auf -70°C abgekühltem Bad aus Silikonöl eingefroren. Nach Entlastung der Probe wurde das Bad mit 1°C/min erwärmt und die prozentuale Rückverformung der Probe in Abhängigkeit von der Temperatur bestimmt. Es wurden jeweils die Temperaturen bestimmt, bei denen sich die Vulkanisate um 10% (TR10), 50% (TR50) und 70 % (TR70) zurückverformt haben, wobei das Vulkanisat umso besser ist, je niedriger die entsprechende Temperatur liegt. Wie man in **Tabelle 7** sieht, wird die Rückverformung der Vulkanisate auf Basis der erfindungsgemäß hergestellten HNBR/VMQ-Blends **1.3, 1.5 und 1.7** bei niedrigeren Temperaturen erreicht als bei den entsprechenden Vulkanisaten der nicht erfindungsgemäßen Beispiele, d. h. die Tieftemperaturflexibilität der erfindungsgemäß hergestellten Beispiele ist verbessert.

**Tabelle 7: Tieftemperatur-Retraktion der vulkanisierten Kautschukmischungen**

| **Biespel** | **1.1VV** | **1.2 VV** | **1.3** | **1.4 VV** | **1.5** | **1.6 VV** | **1.7** | **1.8 VV** |
|---|---|---|---|---|---|---|---|---|
| TR10 (°C) | -23,9 | -24,7 | -25,5 | -27,7 | -27,8 | -24,1 | -27 | -24 |
| TR50 (°C) | -16,4 | -17,4 | -18,0 | -18,7 | -19,7 | -16,5 | -19 | -17 |
| TR70 (°C) | -12,6 | -13,7 | -14,8 | -14,5 | -15,8 | -12,9 | -15 | -14 |

In den Beispielen wird gezeigt, dass durch den Zusatz eines Metathesekatalysators bei der Herstellung von HNBR/VMQ-Blends eine unerwartet gute Verteilung von VMQ in der HNBR-Phase erhalten werden. Die unter Zusatz des Metathesekatalysators hergestellten HNBR/VMQ-Blends weisen eine bimodale Molmassenverteilung auf, die im Vergleich mit den nicht erfindungsgemäßen HNBR/VMQ-Blends zusätzlich einen hochmolekularen Peak (Pfropfcopolymer) aufweisen. Vulkanisate auf Basis der erfindungsgemäß hergestellten HNBR/VMQ-Blends weisen ferner gleich gute oder verbesserte mechanische Eigenschaften sowie verbesserte Eigenschaften bei niedrigen und hohen Temperaturen auf.

## Patentansprüche

1. Verfahren zur Herstellung eines Kautschukblends, indem man mindestens einen teilhydrierten Nitrilkautschuk und mindestens einen vinylgruppenhaltigen Silikonkautschuk miteinander mischt, **dadurch gekennzeichnet, dass** das Mischen in Gegenwart eines Metathese-Katalysators erfolgt, bei dem es sich um einen Komplexkatalysator auf Basis eines Metalls der 6. oder 8. Nebengruppe des Periodensystems handelt, der mindestens einen carbenartig an das Metall gebundenen Liganden aufweist.

2. Verfahren nach Anspruch 1, **dadurch gekennzeichnet, dass** das Verfahren im wesentlichen frei von organischen Lösungsmitteln erfolgt, bevorzugt mit einer Menge an organischem Lösungsmittel von maximal 1200 ppm, besonders bevorzugt maximal 500 ppm und insbesondere maximal 100 ppm.

3. Verfahren nach Anspruch 1 oder 2, **dadurch gekennzeichnet, dass** ein teilhydrierter Nitrilkautschuk eingesetzt wird, der Wiederholungseinheiten enthält, die sich von mindestens einem konjugierten Dien und mindestens einem α,β-ungesättigten Nitril ableiten, wobei die C=C Doppelbindungen aus den einpolymerisierten Dien-Monomeren teilhydriert sind, bevorzugt zu mindestens 50% bis zu maximal 99 %, besonders bevorzugt zu 75 bis 98,5 %, ganz besonders bevorzugt zu 80 bis 98 % und insbesondere zu 85 bis 96%, und dass ein vinylgruppenhaltiges Organopolysiloxan eingesetzt wird, das zwei oder mehr Typen von Wiederholungseinheiten der allgemeinen Formel (I) enthält, 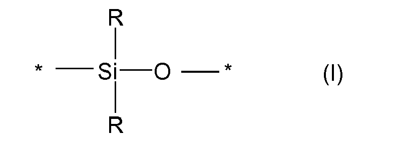 worin
R gleich oder verschieden sind und für einen substituierten oder unsubstituierten monovalenten Kohlenwasserstoff-Rest mit 1 bis 6 Kohlenstoffatomen stehen, wobei das Organopolysiloxan in Summe 1 bis 20.000 Wiederholungseinheiten, bevorzugt 50 bis 15.000, besonders bevorzugt 200 bis 10.000 Wiederholungseinheiten aufweist und ein Typ Wiederholungseinheiten der allgemeinen Formel (I) vorhanden ist, worin mindestens einer der Reste R ein oder mehrere C=C Doppelbindungen enthält.

4. Verfahren nach Anspruch 1 oder 2, **dadurch gekennzeichnet, dass** mindestens ein Acrylnitril-Butadien-Copolymer eingesetzt wird, bei dem 75 bis 98,5 %, ganz besonders bevorzugt zu 80 bis 98 % und insbesondere zu 85 bis 96% der C=C Doppelbindungen hydriert sind, und mindestens ein vinylgruppenhaltiger Silikonkautschuk ausgewählt aus der Gruppe bestehend aus VMQ (Vinylmethylsilikonkautschuk), PVMQ (Phenylvinylmethylsilikonkautschuk) und FVMQ (3,3,3-Trifluorpropylvinylmethylsilikonkautschuk).

5. Verfahren nach Anspruch 1 oder 2, **dadurch gekennzeichnet, dass** ein Metathese-Katalysator der allgemeinen Formel (A) eingesetzt wird, 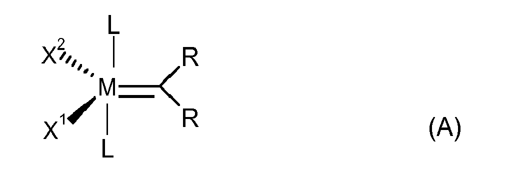 worin
M Osmium oder Ruthenium bedeutet,
X¹, X² gleich oder verschieden sind und zwei Liganden, bevorzugt anionische Liganden, darstellen,
L gleiche oder verschiedene Liganden, bevorzugt neutrale Elektronen-Donoren darstellen, und
R gleich oder verschieden sind und Wasserstoff, Alkyl, bevorzugt C₁-C₃₀-Alkyl, Cycloalkyl, bevorzugt C₃-C₂₀-Cycloalkyl, Alkenyl, bevorzugt C₂-C₂₀-Alkenyl, Alkinyl, bevorzugt C₂-C₂₀-Alkinyl, Aryl, bevorzugt C₆-C₂₄-Aryl, Carboxylat, bevorzugt C₁-C₂₀-Carboxylat, Alkoxy, bevorzugt C₁-C₂₀-Alkoxy, Alkenyloxy, bevorzugt C₂-C₂₀-Alkenyloxy, Alkinyloxy, bevorzugt C₂-C₂₀-Alkinyloxy, Aryloxy, bevorzugt C₆-C₂₄-Aryloxy, Alkoxycarbonyl, bevorzugt C₂-C₂₀-Alkoxycarbonyl, Alkylamino, bevorzugt C₁-C₃₀-Alkylamino, Alkylthio, bevorzugt C₁-C₃₀-Alkylthio, Arylthio, bevorzugt C₆-C₂₄-Arylthio, Alkylsulfonyl, bevorzugt C₁-C₂₀-Alkylsulfonyl, oder Alkylsulfonyl, bevorzugt C₁-C₂₀-Alkylsulfinyl darstellen, wobei diese Reste alle jeweils optional durch ein oder mehrere Alkyl-, Halogen-, Alkoxy-, Aryl- oder Heteroaryl-Reste substituiert sein können, oder alternativ beide Reste R unter Einbindung des gemeinsamen C-Atoms, an das sie gebunden sind, zu einer cyclischen Gruppe verbrückt sind, die aliphatischer oder aromatischer Natur sein kann, gegebenenfalls substituiert ist und ein oder mehrere Heteroatome enthalten kann.

6. Verfahren nach Anspruch 5, **dadurch gekennzeichnet, dass** als Metathese-Katalysatoren solche eingesetzt werden, die die Strukturen (IV) (Grubbs (I)-Katalysator) und (V) (Grubbs (II)-Katalysator), wobei Cy für Cyclohexyl steht, besitzen.

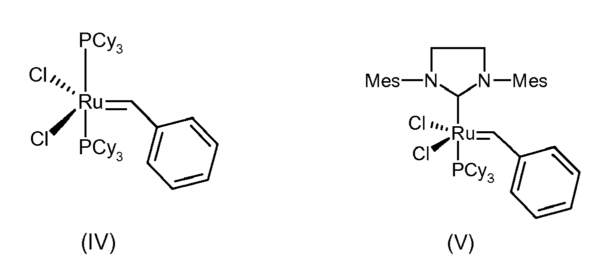

7. Verfahren nach Anspruch 1 oder 2, **dadurch gekennzeichnet, dass** ein Metathese-Katalysator der allgemeinen Formel (B) eingesetzt wird, 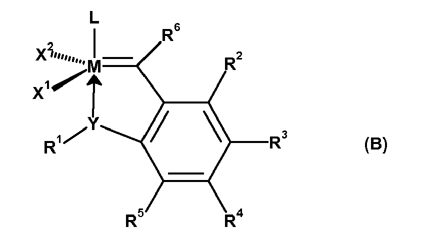 worin
M Ruthenium oder Osmium bedeutet,
X¹ und X² gleiche oder verschiedene Liganden, bevorzugt anionische Liganden sind,
Y Sauerstoff (O), Schwefel (S), einen Rest N-R¹ oder einen Rest P-R¹ bedeutet, wobei R¹ die nachfolgend genannten Bedeutungen besitzt,
R¹ einen Alkyl-, Cycloalkyl-, Alkenyl-, Alkinyl-, Aryl-, Alkoxy-, Alkenyloxy-, Alkinyloxy-, Aryloxy-, Alkoxycarbonyl-, Alkylamino-, Alkylthio-, Arylthio-, Alkylsulfonyl- oder Alkylsulfinyl-Rest darstellt, die alle jeweils optional durch ein oder mehrere Alkyl-, Halogen-, Alkoxy-, Aryl- oder Heteroaryl-Reste substituiert sein können,
R², R³, R⁴, R⁵ gleich oder verschieden sind und Wasserstoff, organische oder anorganische Reste darstellen,
R⁶ H, einen Alkyl-, Alkenyl-, Alkinyl- oder einen Aryl-Rest bedeutet und
L ein Ligand mit den gleichen Bedeutungen wie für die Formel (A) genannt.

8. Verfahren nach Anspruch 1 oder 2, **dadurch gekennzeichnet, dass** ein Metathese-Katalysator der Formel (VII) oder der Formel (XVI) eingesetzt wird, wobei Mes jeweils für 2,4,6-Trimethylphenyl steht.

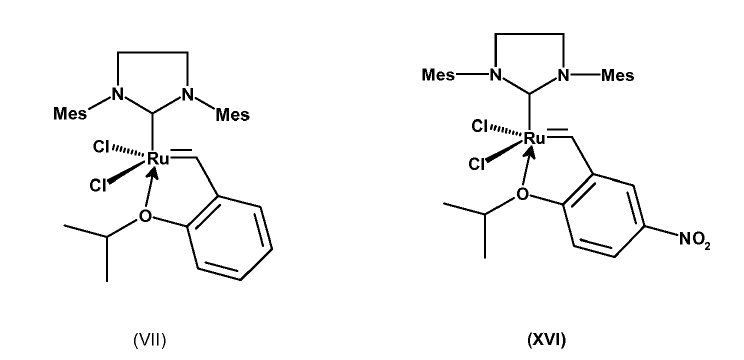

9. Kautschukblend auf Basis mindestens eines teilhydrierten Nitrilkautschuks und mindestens eines vinylgruppenhaltigen Silikonkautschuks erhältlich nach dem Verfahren gemäß Anspruch 1 oder 2.

10. Vulkanisierbare Mischungen enthaltend einen Kautschukblend nach Anspruch 9 sowie mindestens ein peroxidisches Vernetzungssystem.

11. Vulkanisierbare Mischungen nach Anspruch 10, **dadurch gekennzeichnet, dass** man als peroxidisches Vernetzungssystem Bis(2,4-dichlorbenzyl)peroxid, Dibenzoylperoxid, Bis(4-chlorbenzoyl)peroxid, 1,1-Bis-(t-butylperoxy)-3,3,5-trimethylcylohexan, tert-Butylperbenzoat, 2,2 Bis(t-butylperoxy) buten, 4,4-di-tert.Butyl peroxynonylvalerat, Dicumylperoxid, 2,5-Dimethyl-2,5-di(t-butylperoxy)-hexan, tert-Butylcumylperoxid, 1,3-Bis(t-butylperoxy isopropyl)-benzol, Di-t-butylperoxid oder 2,5-Dimethyl-2,5-di(t-butylperoxy)-hexyn-3 einsetzt.

12. Verfahren zur Herstellung von Vulkanisaten, indem man eine vulkanisierbare Mischung nach Anspruch 10 durch Erhöhung der Temperatur einer Vernetzungsreaktion unterzieht.

13. Vulkanisate auf Basis mindestens eines teilhydrierten Nitrilkautschuks und mindestens eines vinylgruppenhaltigen Silikonkautschuks erhältlich nach dem Verfahren gemäß Anspruch 12.
